# EUROPÄISCHE PATENTSCHRIFT

(11) **EP 4 476 017 B1**
(45) Veröffentlichungstag und Bekanntmachung des Hinweises auf die Patenterteilung: **28.01.2026**
(21) Anmeldenummer: 23704344.3
(22) Anmeldetag: 09.02.2023
(51) Int. Cl.: B23K 9/04, B23K 9/23, B23K 9/235, B23K 26/00, B23K 26/342, F16L 13/02, F16L 58/10, F16L 58/18, B23K 101/06

(54) **ROHRABSCHNITT, ROHRANORDNUNG, HERSTELLVERFAHREN FÜR ROHRABSCHNITT UND ROHRANORDNUNG UND VERWENDUNG EINER ROHRANORDNUNG**
PIPE SECTION, PIPE ASSEMBLY, METHOD FOR MANUFACTURING A PIPE SECTION AND A PIPE ARRANGEMENT, AND USE OF A PIPE ASSEMBLY
PARTIE DE TUYAU, AGENCEMENT DE TUYAU, PROCÉDÉ DE PRODUCTION D'UNE PARTIE DE TUYAU ET D'UN AGENCEMENT DE TUYAU ET UTILISATION D'UN AGENCEMENT DE TUYAU

(30) Priorität: 11.02.2022 DE 102022103245
(43) Veröffentlichungstag der Anmeldung: 18.12.2024
(73) Patentinhaber: SMS group GmbH, 41069 Mönchengladbach (DE)
(72) Erfinder: DOEGE, Jörg, 57072 Siegen (DE); LICHTENTHÄLER, Frank, 57627 Hachenburg (DE); MÖLLER, Lars, 57562 Herdorf (DE); OBERSTE-LEHN, Ulli, 50679 Köln (DE); STARK, Michael, 88677 Markdorf (DE); VOCHSEN, Jochen, 41812 Erkelenz (DE)
(74) Vertreter: Richly & Ritschel Patentanwälte PartG mbB
(86) Internationale Anmeldenummer: PCT/EP2023/053243
(87) Internationale Veröffentlichungsnummer: WO 2023/152252

(56) Entgegenhaltungen:
- EP-A1- 3 705 766
- WO-A1-2020/221819
- CN-A- 109 881 194
- US-A1- 2019 119 802
- R. C. TUCKER: "Considerations in the Selection of Coatings", ADVANCED MATERIALS & PROCESSES, AMERICA SOCIETY FOR METALS. METALS PARK, OHIO, US, vol. 162, no. 3, 1 March 2004 (2004-03-01), pages 25 - 28, XP002439374, ISSN: 0882-7958

## Beschreibung

Die Erfindung betrifft einen Rohrabschnitt, eine Rohranordnung, ein Herstellverfahren für einen Rohrabschnitt und eine Rohranordnung und eine Verwendung einer Rohranordnung, siehe Ansprüche 1, 10, 11, 14 und 15.

Korrosionsbeständige und/oder gegen abrasiven Verschleiß ausgekleidete medienführende Leitungsrohre sind in unterschiedlichen Ausführungsformen im Stand der Technik bekannt und werden insbesondere als Wasser-, Gas- oder Ölpipelinerohre und/oder in der Chemieindustrie eingesetzt.

Insbesondere in der öl- und gasfördernden Industrie wächst die Nachfrage nach korrosionsbeständigen Rohren, da in der Zukunft erwartet wird, dass die zu fördernden Fluide höhere Wasseranteile und höhere Konzentrationen von Wasserstoffsulfid (H₂S) und Kohlendioxid (CO₂) aufweisen werden.

Weiterhin zeichnet sich der Trend ab, dass die zu fördernden Fluide zunehmend harte Festkörper mit sich führen, wodurch auch ein besonderer Schutz der Leitungsrohre gegen abrasiven Verschleiß verstärkt im Interesse der Rohrleitungsbetreiber liegt.

Geeignete Rohre für solche Medien sind Stahlrohre mit einer geeigneten Innenbeschichtung, einer Innenauskleidung bzw. einer Innenplattierung oder einem separaten Innenrohr, die gegenüber Rohren aus hochlegierten Stählen Kostenvorteile bieten.

So sind Stahlrohre bekannt, die zum Schutz vor Korrosion und/oder abrasivem Verschleiß eine Kunststoffverschleißschutzschicht auf der medienfördernden Innenseite aufweisen. Hierbei wird auch von einem organischen Korrosionsschutz gesprochen, wobei flüssig aufgetragene Epoxidschichten oder auch mehrschichtige Kunststoffverschleißschutzschichten bekannt sind. Bei Letzteren werden zumeist Epoxidharzmischungen in Pulverform auf die Innenoberfläche eines erwärmten Rohrs aufgetragen. Solche organischen Beschichtungen sind zwar relativ korrosionsbeständig, ihre Lebensdauer ist jedoch bei der Verwendung für Medien mit harten Festkörperpartikeln beschränkt, da die Kunststoffverschleißschutzschicht durch abrasiven Verschleiß vergleichsweise schnell abgetragen wird.

Weiterhin sind plattierte Stahlrohre bekannt, die mit einer Innenplattierung aus einem korrosionsbeständigen und/oder abrasionsbeständigeren metallischen Werkstoff versehen sind.

Innenplattierte Stahlrohre können entsprechend ihrer unterschiedlichen Herstellung in metallurgisch plattierte Stahlrohre und hydromechanisch plattierte Stahlrohre unterschieden werden.

Metallurgisch plattierte Rohrabschnitte werden zumeist aus einem walzplattierten oder einem sprengplattierten Vormaterial ausgeformt und zu einem Rohrabschnitt verschweißt. Dabei sind die beiden Metallschichten durch eine Diffusionsbrücke metallurgisch fest miteinander verbunden, weshalb auch von metallurgisch plattierten Rohrabschnitten gesprochen wird. Hinsichtlich der Materialauswahl für metallurgisch plattierte Rohrabschnitte ist zu berücksichtigen, dass die unterschiedlichen Werkstoffe für eine hinreichend feste Diffusionsbrücke metallurgisch ausreichend kompatibel zueinander sein müssen.

Hydromechanisch plattierte Rohrabschnitte stellen eine bekannte Alternative zu den metallurgisch plattierten Rohrabschnitten dar. Diese werden mittels einem hydraulischen Expansionsprozess eines Innenrohres in einem nahtlosen oder geschweißten Außenrohr hergestellt. Dieses Verfahren ist auch als Hydroforming bekannt. Dabei wird das Innenrohr in ein geeignetes Außenrohr eingebracht und zunächst elastisch, dann plastisch so weit verformt, bis es an der Innenwand des Außenrohres anliegt. Hieran schließt sich noch eine gemeinsame Aufweitung des Innen- und Außenrohres um etwa 0,5 % bis 1 % an, wobei das Außenrohr von einem Außenwerkzeug gehalten wird. Auf diese Weise wird das Innenrohr aufgrund einer in der Regel größeren elastischen Rückfederungsrate des Außenrohres in einen Druckeigenspannungszustand versetzt, sodass das Innenrohr in das Außenrohr eingestaucht ist. Die Materialdicken können sich an den Anforderungen für die Festigkeit und den Korrosionsschutz ausrichten. Hinsichtlich der Werkstoffkombination ist jedoch zu berücksichtigen, dass das Innenrohr und das Außenrohr vor dem Expandieren stirnseitig durch eine gemeinsame Schweißverbindung geschlossen werden müssen, um das Eindringen von Feuchtigkeit in den Zwischenraum der Rohre bei dem Expansionsprozess zu vermeiden. Nach dem Expandieren werden das Innenrohr und das Außenrohr stirnseitig angefast und erneut mit einer Dichtnahtschweißung oder einer Schweißplattierung versehen, damit auch beim fertigen Rohrabschnitt keine Feuchtigkeit zwischen Innenrohr und Außenrohr eindringen kann. Im Anschluss kann eine endgültige Fase an den hydromechanisch plattierten Rohrabschnitt angebracht und die Enden der Rohrabschnitte können mittels mechanischer Werkzeuge kalibriert werden, damit geforderte Toleranzen eingehalten werden können.

Gemäß einer im Stand der Technik bekannten Weiterentwicklung können hydromechanisch plattierte Rohrabschnitte mit einem Kleber zwischen dem Innenrohr und dem Außenrohr versehen sein.

Zusätzlich zu einer Kunststoffverschleißschutzschicht und den innenplattierten Stahlrohren kann eine Innenbeschichtung mit korrosionsbeständigen und/oder abrasionsbeständigeren schweißbaren Metallen durch eine Auftragsschweißung mit dem Außenrohr verbunden werden. Dieses Vorgehen ist zeitintensiv, ein Wärmeeintrag in das Außenrohr kann nicht vermieden werden und es kommt zu einer Durchmischung der Werkstoffe von Außenrohr und Schweißzusatzwerkstoff. Die Innenbeschichtung wird in mehreren nebeneinander angeordneten sogenannten Schweißraupen aufgetragen, wodurch auch die Oberflächenstruktur vergleichsweise rau und uneben ausgebildet wird. Zur Vermeidung eines hohen Strömungswiderstandes kann eine spanabhebende Nachbearbeitung erfolgen.

WO 2020/221819 A1 offenbart den Oberbegriff der Ansprüche 1 und 11.

Der Erfindung liegt die Aufgabe zugrunde, dem Stand der Technik eine Verbesserung oder eine Alternative zur Verfügung zu stellen.

Nach einem ersten Aspekt der Erfindung löst die Aufgabe ein Rohrabschnitt, insbesondere ein Rohrabschnitt zum Befördern von Öl und/oder Gas, entsprechend Anspruch 1, und aufweisend:
- eine Trägerschicht bestehend aus einem metallischen Grundwerkstoff, wobei die Trägerschicht eine Länge, einen Innendurchmesser, eine Innenfläche, eine Außenfläche zumindest zwei Rohrabschnittenden mit jeweils einem Endbereich und einen Zwischenbereich aufweist;
- in jedem Endbereich der Innenfläche der Trägerschicht eine erste Beschichtung bestehend aus einem ersten metallischen Beschichtungswerkstoff, wobei die erste Beschichtung mit der Trägerschicht verschweißt ist, wobei die erste Beschichtung eine erste Dicke, eine Einbrandtiefe und eine Längserstreckung aufweist; und
- in dem Zwischenbereich der Innenfläche der Trägerschicht eine zweite Beschichtung bestehend aus einem zweiten metallischen Beschichtungswerkstoff, wobei die zweite Beschichtung mit einem thermischen Spritzverfahren auf die Trägerschicht aufgespritzt ist;
wobei die Trägerschicht an der Innenfläche eine Rauheit Rₐ von größer oder gleich 0,2 µm aufweist, bevorzugt eine Rauheit Rₐ von größer oder gleich 0,4 µm und besonders bevorzugt eine Rauheit Rₐ von größer oder gleich 0,8 µm.

Begrifflich sei hierzu Folgendes erläutert:
Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein..", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Im Rahmen der hier vorliegenden Patentanmeldung sei der Ausdruck "insbesondere" immer so zu verstehen, dass mit diesem Ausdruck ein optionales, bevorzugtes Merkmal eingeleitet wird. Der Ausdruck ist nicht als "und zwar" und nicht als "nämlich" zu verstehen.

Unter einem "Rohrabschnitt" wird ein länglicher Hohlkörper verstanden, welcher zum Transport eines designierten Fluids eingerichtet ist.

Ein Rohrabschnitt kann zum Transport eines designierten Fluids bei korrosionschemischer Beanspruchung durch das Fluid und/oder bei abrasivem Verschleiß durch mitgeführte granulierte Festkörper eingerichtet sein.

Insbesondere kann ein Rohrabschnitt zum Transport von Öl und/oder Gas und/oder eines Fluids aufweisend einen flüssigen fossilen Energieträger und/oder zur Verwendung im chemischen Anlagenbau eingerichtet sein.

Unter einer "Trägerschicht" wird eine Schicht des Rohrabschnitts aus einem Grundwerkstoff verstanden, welche zur Aufnahme und zum Weiterleiten äußerer und/oder innerer Belastungen eingerichtet ist.

Die Trägerschicht kann ein im Vergleich zur ersten Beschichtung und/oder zweiten Beschichtung dickwandiger Hohlkörper sein. Dir Trägerschicht kann auf der Außenseite an die erste Beschichtung und/oder zweite Beschichtung angrenzen.

Die Trägerschicht kann eine Schweißnaht aufweisen oder nahtlos hergestellt sein.

Die Trägerschicht kann einen Innendurchmesser von größer oder gleich 150 mm aufweisen, vorzugsweise einen Innendurchmesser von größer oder gleich 250 mm, bevorzugt einen Innendurchmesser von größer oder gleich 450 mm und besonders bevorzugt einen Innendurchmesser von größer oder gleich 650 mm. Weiterhin vorzugsweise ist der Innendurchmesser der Trägerschicht größer oder gleich 850 mm, bevorzugt größer oder gleich 1050 mm und besonders bevorzugt größer oder gleich 1250 mm.

Die Trägerschicht kann eine Wandstärke von größer oder gleich 6 mm aufweisen, vorzugsweise eine Wandstärke von größer oder gleich 8 mm, bevorzugt eine Wandstärke von größer oder gleich 10 mm und besonders bevorzugt eine Wandstärke von größer oder gleich 12 mm. Darüber hinaus kann die Trägerschicht kann eine Wandstärke von größer oder gleich 15 mm aufweisen, vorzugsweise eine Wandstärke von größer oder gleich 20 mm, bevorzugt eine Wandstärke von größer oder gleich 25 mm und besonders bevorzugt eine Wandstärke von größer oder gleich 30 mm. Weiterhin vorzugsweise kann die Trägerschicht kann eine Wandstärke von größer oder gleich 35 mm aufweisen, vorzugsweise eine Wandstärke von größer oder gleich 40 mm, bevorzugt eine Wandstärke von größer oder gleich 45 mm und besonders bevorzugt eine Wandstärke von größer oder gleich 50 mm.

Die Trägerschicht kann eine Länge von größer oder gleich 4 m aufweisen, vorzugsweise eine Länge von größer oder gleich 8 m, bevorzugt eine Länge von größer oder gleich 12 m und besonders bevorzugt eine Länge von größer oder gleich 13 m.

Die Trägerschicht kann im Wesentlichen kreisrund ausgeformt sein, wobei sie eine Ovalität aufweisen kann.

Unter einem "Grundwerkstoff" der Trägerschicht wird ein Stahl als Eisen-Kohlenstoff-Legierung mit einem Kohlenstoff-Massenanteil von maximal 2,1 % definiert. Vorzugsweise enthält der Grundwerkstoff neben seinem Hauptbestandteil Eisen als Nebenbestandteil hauptsächlich Kohlenstoff. Mit anderen Worten kann der Bestandteil eines Legierungsbestandteils oder der Bestandteil der Summe der Legierungsbestandteile kleiner sein als der Kohlenstoffanteil des Grundwerkstoffs.

Der Grundwerkstoff kann einen Kohlenstoffanteil von kleiner oder gleich 0,3 %, bevorzugt einen Kohlenstoffanteil von kleiner oder gleich 0,26 % und besonders bevorzugt einen Kohlenstoffanteil von kleiner oder gleich 0,22 % aufweisen, wodurch die Schweißeignung des Grundwerkstoffs verbessert werden kann.

Der Grundwerkstoff kann Mangan aufweisen, wodurch die Schmiedbarkeit, die Schweißbarkeit, die Festigkeit und der Verschleißwiderstand des Grundwerkstoffs verbessert werden können. Vorzugsweise weist der Grundwerkstoff einen Mangananteil von größer oder gleich 0,8 % auf, vorzugsweise einen Mangananteil von größer oder gleich 1,2 %, bevorzugt einen Mangananteil von größer oder gleich 1,4 % und besonders bevorzugt einen Mangananteil von größer oder gleich 1,6 %.

Ein Siliziumanteil des Grundwerkstoffes kann die Zugfestigkeit und die Streckgrenze erhöhen. Der Grundwerkstoff kann einen Siliziumanteil von größer oder gleich 0,35 % aufweisen, bevorzugt einen Siliziumanteil von größer oder gleich 0,4 % und besonders bevorzugt einen Siliziumanteil von größer oder gleich 0,45 %.

Die Streckgrenze des Grundwerkstoffs kann größer oder gleich 280 N/mm² sein, vorzugsweise größer oder gleich 350 N/mm², bevorzugt größer oder gleich 350 N/mm² und besonders bevorzugt größer oder gleich 410 N/mm². Weiterhin vorzugsweise ist die Streckgrenze des Grundwerkstoffs größer oder gleich 440 N/mm², bevorzugt größer oder gleich 480 N/mm² und besonders bevorzugt größer oder gleich 550 N/mm².

Der Grundwerkstoff kann ein Werkstoff gemäß dem API-Standard (American-Petroleum-Institute) sein, insbesondere ein X42, ein X52, ein X60, ein X65, ein X70, ein X80 oder ein Grundwerkstoff mit einem höheren Anteil von Legierungselementen. Weiterhin kann der metallische Grundwerkstoff gemäß der DIN EN 10208-2 ein L 360QB, ein L 415QB, ein L 450QB oder ein L 485QB sein.

Ein Rohrabschnitt weist an jedem Ende des langgestreckten Hohlkörpers ein "Rohrabschnittende" auf, an welches sich jeweils ein "Endbereich" anschließt. Die beidseitig angeordneten Endbereiche erstrecken sich mit einer "Längserstreckung" bis zu dem im Wesentlichen mittig oder mittig angeordneten "Zwischenbereich" des Rohrabschnitts.

Die Endbereiche sind durch die in den beidseitigen Endbereichen jeweils auf der Innenfläche der Trägerschicht angeordneten "ersten Beschichtungen" aus einem "ersten Beschichtungswerkstoff" determiniert.

Der Zwischenbereich weist eine "zweite Beschichtung" aus einem "zweiten Beschichtungswerkstoff" auf.

Es wird ausdrücklich darauf hingewiesen, dass die Bezeichnung zweite Beschichtung nicht zwingend eine erste Beschichtung erfordert. Dabei sei auch an eine Ausführungsform eines Rohrabschnitts gedacht, welcher auf der Innenfläche der Trägerschicht eine Beschichtung bestehend aus einem metallischen Beschichtungswerkstoff mit einer Dicke aufweist, wobei die Beschichtung mit einem thermischen Spritzverfahren auf die Trägerschicht aufgespritzt ist. In dieser besonders bevorzugten Ausführungsform kann der im nachfolgenden verwendete Begriff "zweite Beschichtung" im Rahmen der vorliegenden Beschreibung mit dem Begriff "Beschichtung" ohne die Angabe einer Zahl gleichgesetzt werden. Analog gilt dies im Rahmen der vorliegenden Beschreibung für den Begriff des "zweiten metallischen Beschichtungswerkstoffes", welcher mit dem Begriff metallischer Beschichtungswerkstoff ohne die Angabe einer Zahl gleichgesetzt werden kann, und für den Begriff der "zweiten Dicke", welcher mit dem Begriff Dicke ohne die Angabe einer Zahl gleichgesetzt werden kann.

Die Länge des Zwischenbereichs ist mindestens größer oder gleich der Länge der Trägerschicht abzüglich der jeweiligen Längserstreckungen der Endbereiche, sodass eine durchgehende Beschichtung sichergestellt werden kann. Hierzu kann die zweite Beschichtung und die erste Beschichtung zumindest teilweise in einem Überlappungsbereich überlappend angeordnet sein, wobei die zweite Beschichtung die erste Beschichtung überlappt.

Erster und zweiter Beschichtungswerkstoff können identisch sein, sodass die Werkstoffeigenschaften der Beschichtung in einer Rohranordnung aus mehreren Rohrabschnitten über den Verlauf der Rohranordnung weitgehend homogen sein können, insbesondere gegenüber einem designierten Fluid in der Rohranordnung. Erster und zweiter Beschichtungswerkstoff können aber auch voneinander abweichen, sodass sich insbesondere im Bereich eines stoffschlüssigen Verbundes eine gewünschte Legierung ausbildet, welche ihrerseits die notwendige Korrosionsbeständigkeit und/oder abrasionsbeständigen Eigenschaften aufweist.

Insbesondere weist die erste Beschichtung und/oder die zweite Beschichtung eine ausreichende Korrosionsbeständigkeit gegenüber H₂S und/oder CO₂ auf, welche von einer Kunststoffbeschichtung derzeit nicht erreicht wird.

Die erste Beschichtung ist mit der Trägerschicht "verschweißt", worunter ein mit einem Auftragsschweißverfahren herbeigefügter stoffschlüssiger Verbund von Trägerschicht und erster Beschichtung verstanden wird. Hierbei entsteht eine "Einbrandtiefe", welche sich durch eine Materialaufmischung von Grundwerkstoff der Trägerschicht und erstem Beschichtungswerkstoff kennzeichnet und auf den Bereich begrenzt, der vor dem Verschweißen von dem Grundwerkstoff der Trägerschicht eingenommen worden ist.

Unter der "ersten Dicke" der ersten Beschichtung wird die sich radial zur Längserstreckungsrichtung des Rohrabschnitts erstreckende Dicke der ersten Beschichtungsschicht verstanden. Die erste Dicke umfasst damit auch die Einbrandtiefe der ersten Beschichtung.

Unter einem "thermischen Spritzverfahren" wird ein Oberflächenbeschichtungsverfahren verstanden, wobei ein Spritzwerkstoff innerhalb oder außerhalb eines Spritzbrenners verflüssigt wird, in einem Gasstrom in Form von Spritzpartikeln beschleunigt wird und auf die Oberfläche des zu beschichtenden Bauteils geschleudert wird. Vorteilhaft wird die Bauteiloberfläche dabei nicht geschmolzen und thermisch nur in geringem Maße belastet. Eine Schichtbildung findet statt, da die Spritzpartikel beim Auftreffen auf die Bauteiloberfläche prozess- und materialabhängig mehr oder minder abflachen, vorrangig durch mechanische Verklammerung haften bleiben und lagenweise die Spritzschicht aufbauen. Qualitätsmerkmale von Spritzschichten sind geringe Porosität, gute Anbindung ans Bauteil, Rissfreiheit und homogene Mikrostruktur. Thermische Spritzverfahren lassen sich anhand des verwendeten Energieträgers zum verflüssigen des Spritzwerkstoffs unterscheiden. Zu den unterschiedlichen Verfahren gehören das Lichtbogenspritzen, das Plasmaspritzen, das Flammspritzen, das Kaltgasspritzen und das Laserspritzen.

Durch die Verwendung einer mit einem stoffschlüssigen Verbund mit der Trägerschicht verbundenen ersten Beschichtung und einer mit einem Formschluss verbundenen zweiten Beschichtung mit der Trägerschicht kann vorteilhaft erreicht werden, dass die Beschichtung robust gegen den Wärmeeintrag beim designierten Verschweißen mehrerer Rohrabschnitte zu einer Rohranordnung und etwaig an den Rohrabschnittenden auftretende mechanische Lasten ist und gleichzeitig kostengünstig ist.

Eine "Rauheit" bezeichnet die Unebenheit der Oberflächenhöhe. Zur quantitativen Charakterisierung der Rauheit gibt es unterschiedliche Berechnungsverfahren, die jeweils auf verschiedene Eigenheiten der Oberfläche Rücksicht nehmen. Die "Rauheit Rₐ" oder Mittenrauheit gibt den mittleren Abstand eines Messpunktes auf der Oberfläche zur Mittellinie an.

Es versteht sich, dass bei der Spezifizierung der Rauheit die Rauheit der Trägerschicht nach dem Aufrauen der Innenfläche der Trägerschicht verstanden wird. Dabei weist die Trägerschicht die Rauheit an der Innenfläche auf.

Sofern bereits eine erste Beschichtung in dem Endbereich der Trägerschicht aufgebracht worden ist, kann die Rauigkeit der Trägerschicht in dem Endbereich nicht mehr spezifiziert werden. In diesem Fall kann sich die Angabe der Rauheit auf den Zwischenbereich der Innenfläche der Trägerschicht beziehen.

Die erste Beschichtung und die zweite Beschichtung wirken gemeinsam gegen Korrosion und/oder abrasiven Verschleiß der Trägerschicht.

Im Stand der Technik sind innenplattierte Stahlrohre bekannt. Die Trägerschicht dieser innenplattierten Stahlrohre besteht aus einem gewalzten Vormaterial. Beim Plattieren, insbesondere beim metallurgischen Plattieren, müssen die zu verbindenden Oberflächen metallisch blank sein.

Abweichend wird hier ein Rohrabschnitt aufweisend eine mit einem thermischen Spritzverfahren auf die Trägerschicht aufgebrachte Beschichtung aus einem metallischen Beschichtungswerkstoff an der Innenseite der Trägerschicht, insbesondere eine erste mit der metallischen Trägerschicht verschweißte Beschichtung bestehend aus einem ersten metallischen Beschichtungswerkstoff und eine zweite mit einem thermischen Spritzverfahren auf die Trägerschicht aufgebrachte Beschichtung aus einem zweiten metallischen Beschichtungswerkstoff, vorgeschlagen, wobei die Trägerschicht an der Innenseite eine Mindestrauheit Rₐ aufweist, insbesondere eine Rauheit Rₐ von größer oder gleich 0,2 µm, bevorzugt eine Rauheit Rₐ von größer oder gleich 0,4 µm und besonders bevorzugt eine Rauheit Rₐ von größer oder gleich 0,8 µm.

Besonders zweckmäßig weist die Trägerschicht an der Innenfläche eine Rauheit Rₐ von größer oder gleich 1,6 µm auf, vorzugsweise eine Rauheit Rₐ von größer oder gleich 3,2 µm, bevorzugt eine Rauheit Rₐ von größer oder gleich 5,0 µm und besonders bevorzugt eine Rauheit Rₐ von größer oder gleich 5,6 µm. Weiterhin kann die Trägerschicht an der Innenfläche eine Rauheit Rₐ von größer oder gleich 6,3 µm aufweisen, vorzugsweise eine Rauheit Rₐ von größer oder gleich 7,1 µm, bevorzugt eine Rauheit Rₐ von größer oder gleich 8,0 µm und besonders bevorzugt eine Rauheit Rₐ von größer oder gleich 10,0 µm.

Die Trägerschicht und die Beschichtung, insbesondere die zweite Beschichtung, sind durch die Verwendung eines thermischen Spritzverfahrens zum Auftragen der Beschichtung, insbesondere der zweiten Beschichtung, durch einen Formschluss miteinander verbunden. Es hat sich gezeigt, dass mit den hier geforderten Werten für die Rauheit eine besonders gute Anhaftung der zweiten Beschichtung an der Trägerschicht erreicht werden kann, wodurch die Delaminationsbeständigkeit der Beschichtung, insbesondere der zweiten Beschichtung, verbessert werden kann.

Die geforderten Minimalwerte für die Rauheit können insbesondere mit einem Oberflächenvorbereitungsverfahren erreicht werden, insbesondere durch ein Strahlverfahren, insbesondere unter Verwendung von Korund oder Stahlkies als Strahlmittel.

**Tab. 1: Rauheit, Beständigkeit gegen abrasiven Verschleiß und Delaminationsbeständigkeit bei einer zweiten Dicke der zweiten Beschichtung von 200 µm; bei abweichenden Werten der zweiten Dicke zwischen 100 µm und 500 µm ist der Einfluss der zweiten Dicke auf die Eigenschaften in erster Näherung vernachlässigbar klein (Bewertung jeweils zwischen 0 und 10, wobei 0 die kleinstmögliche Ausprägung und 10 die größtmögliche Ausprägung der jeweiligen Eigenschaft bedeutet.)**

| Rauheit | Beständigkeit gegen abrasiven Verschleiß | Delaminationsbeständigkeit |
|---|---|---|
| 0,2 µm | 0 | 0 |
| 0,4 µm | 0 | 0 |
| 0,8 µm | 2 | 2 |
| 1,6 µm | 5 | 5 |
| 3,2 µm | 8 | 8 |
| 5,0 µm | 10 | 10 |
| 5,6 µm | 10 | 10 |
| 6,3 µm | 10 | 10 |
| 7,1 µm | 10 | 10 |
| 8,0 µm | 9 | 10 |
| 10 µm | 8 | 10 |
| 12,5 µm | 7 | 10 |
| 25 µm | 6 | 10 |

Somit wird hier eine Rauheit der Trägerschicht an der Innenfläche gefordert, die im Vergleich zu einer gewalzten Oberfläche mit einer charakteristischen Rauheit Rₐ von kleiner oder gleich 0,1 µm vergleichsweise hoch ist, wodurch ein besserer Formschluss und/oder eine bessere Anhaftung der Beschichtung, insbesondere der zweiten Beschichtung, an der Trägerschicht erreicht werden kann.

Entsprechend der Erfindung weist die Trägerschicht an der Innenfläche eine Rauheit Rₐ von kleiner oder gleich 25,0 µm auf, bevorzugt eine Rauheit Rₐ von kleiner oder gleich 12,5 µm und besonders bevorzugt eine Rauheit Rₐ von kleiner oder gleich 10,0 µm.

Besonders zweckmäßig weist die Trägerschicht an der Innenfläche eine Rauheit Rₐ von kleiner oder gleich 8,0 µm aufweisen, bevorzugt eine Rauheit Rₐ von kleiner oder gleich 7,1 µm und besonders bevorzugt eine Rauheit Rₐ von kleiner oder gleich 6,3 µm. Weiterhin kann die Trägerschicht an der Innenfläche eine Rauheit Rₐ von kleiner oder gleich 5,6 µm aufweisen, bevorzugt eine Rauheit Rₐ von kleiner oder gleich 5,0 µm und besonders bevorzugt eine Rauheit Rₐ von kleiner oder gleich 3,2 µm.

Es hat sich gezeigt, dass mit steigenden Werten der Rauheit der Innenfläche der Trägerschicht in einigen Ausführungsformen eine größere Dicke der Beschichtung, insbesondere eine größere zweite Dicke der zweiten Beschichtung, notwendig werden kann, um homogene und ausreichend beständige Eigenschaften der Beschichtung, insbesondere der zweiten Beschichtung, zu erreichen.

Durch die hier geforderten Maximalwerte für die Rauheit Rₐ an der Innenfläche der Trägerschicht kann die Dicke der Beschichtung, insbesondere die zweite Dicke der zweiten Beschichtung, für einige Anwendungsfälle in einen guten Kompromiss zwischen Anhaftung der Beschichtung, insbesondere der zweiten Beschichtung, an der Trägerschicht und Kosten für die Beschichtung, insbesondere die zweite Beschichtung, gebracht werden.

Gemäß einer bevorzugen Ausführungsform weist die Beschichtung eine Dicke, insbesondere die zweite Beschichtung eine zweite Dicke, von kleiner oder gleich 2.500 µm auf, bevorzugt eine zweite Dicke von kleiner oder gleich 750 µm und besonders bevorzugt eine zweite Dicke von kleiner oder gleich 500 µm.

Begrifflich sei hierzu Folgendes erläutert:
Unter der "Dicke" der Beschichtung, insbesondere der zweiten Dicke der zweiten Beschichtung" wird die sich radial zur Längserstreckungsrichtung des Rohrabschnitts erstreckende Dicke der zweiten Beschichtungsschicht verstanden. Die zweite Dicke wir dabei ausgehend von der mittleren Rauigkeit der Innenfläche der Trägerschicht aus bewertet.

Die zweite Dicke der zweiten Beschichtung kann kleiner sein als die erste Dicke der ersten Beschichtung.

Die zweite Beschichtung kann eine zweite Dicke von kleiner oder gleich 1.500 µm aufweisen, vorzugsweise eine zweite Dicke von kleiner oder gleich 1.000 µm, weiterhin bevorzugt eine zweite Dicke von kleiner oder gleich 600 µm und besonders bevorzugt eine zweite Dicke von kleiner oder gleich 400 µm. Weiterhin kann die zweite Beschichtung eine zweite Dicke von kleiner oder gleich 300 µm aufweisen, vorzugsweise eine zweite Dicke von kleiner oder gleich 200 µm, weiterhin bevorzugt eine zweite Dicke von kleiner oder gleich 150 µm und besonders bevorzugt eine zweite Dicke von kleiner oder gleich 100 µm.

Überraschenderweise und entgegen der bisherigen Annahme, dass höhere zweite Dicken zu einer geringeren Delaminationsneigung der zweiten Beschichtung führen, wurde herausgefunden, dass dies bei weiterer Zunahme der zweiten Dicke umgekehrt ist. Die zweite Beschichtung weist bedingt durch das thermische Spritzverfahren, mit welcher sie aufgetragen ist, eine geringfügige Porosität auf. Es hat sich gezeigt, dass im Wirkverbund mit einem Korrosionsprozess innerhalb der Poren eine größere Schichtdicke der zweiten Beschichtung zu einer reduzierten Delaminationsbeständigkeit der zweiten Beschichtung führen kann.

**Tab. 2: Zweite Dicke, Materialkosten, Beständigkeit gegen abrasiven Verschleiß und Delaminationsbeständigkeit (Bewertung jeweils zwischen 0 und 10, wobei 0 die kleinstmögliche Ausprägung und 10 die größtmögliche Ausprägung der jeweiligen Eigenschaft bedeutet.)**

| Zweite Dicke | Materialkosten | Beständigkeit gegen abrasiven Verschleiß | Delaminationsbeständigkeit |
|---|---|---|---|
| 100 µm | 0,4 | 0,2 | 7 |
| 150 µm | 0,6 | 0,5 | 9 |
| 200 µm | 0,8 | 0,8 | 10 |
| 300 µm | 1,2 | 1,2 | 10 |
| 400 µm | 1,6 | 1,6 | 10 |
| 500 µm | 2 | 2 | 10 |
| 600 µm | 2,4 | 2,4 | 9 |
| 750 µm | 3 | 3 | 9 |
| 1.000 µm | 4 | 4 | 8 |
| 1.500 µm | 6 | 6 | 7 |
| 2.500 µm | 8 | 8 | 4 |
| 3.000 µm | 10 | 10 | 2 |

Daher wird hier eine zweite Dicke der zweiten Beschichtung mit einer spezifizierten Maximaldicke vorgeschlagen.

Gleichzeitig sinkt dabei der notwendige Aufwand für eine langfristig widerstandfähige und korrosionsfeste Beschichtung eines Rohrabschnitts erheblich. Es ist nämlich keine aufwändige Plattierung des gesamten Rohrabschnittbereichs erforderlich und es ist nach dem Verschweißen der einzelnen Rohrabschnitte keine Nachbeschichtung im Schweißnahtbereich an der Innenoberfläche erforderlich.

Der hier vorgeschlagene Rohrabschnitt ist durch seine erste und zweite Beschichtung besonders robust gegen Korrosion und/oder Abrasion, insbesondere im Vergleich zu derzeit bekannten Kunststoffbeschichtungen.

De vergleichsweise geringe Materialstärke der zweiten Beschichtung kann vorteilhaft dazu führen, dass kostenintensive Legierungselemente eingespart werden können.

Im Vergleich zum Außenrohr eines hydromechanisch plattierten Rohrabschnitts kann die Rauheit an der Innenfläche der Trägerschicht größer sein, wodurch ein besserer Materialverbund zwischen Trägerschicht und Beschichtung erreicht werden kann.

Im Vergleich zu plattierten metallurgisch plattierten Rohrabschnitten ist die Materialkombination von Grundwerkstoff der Trägerschicht und erstem und/oder zweitem Beschichtungswerkstoff nicht abhängig von der beim metallurgischen Plattieren herbeizuführenden Diffusionsverbindung.

Gegenüber einem hydromechanisch plattierten Rohrabschnitt kann der zweite Beschichtungswerkstoff unabhängig von der Schweißbarkeit mit dem Grundwerkstoff ausgewählt werden. Beim hydromechanischen Plattieren sorgt die Notwendigkeit einer Dichtschweißverbindung zwischen der Trägerschicht und der Beschichtung dazu, dass der gesamte Beschichtungswerkstoff in Kombination mit dem Grundwerkstoff schweißbar sein muss.

Durch die weitestgehend freie Auswahl für den zweiten Beschichtungswerkstoff kann eine bessere Widerstandsfähigkeit gegenüber Abrasion und/oder eine bessere Korrosionsbeständigkeit und/oder eine höhere Duktilität der zweiten Beschichtung erreicht werden.

Im Vergleich zu einem hydromechanisch plattierten Rohrabschnitt erfolgt beim Auftragen der ersten und/oder zweiten Beschichtung keine plastische Verformung der Trägerschicht, wodurch der Aufwand für eine Kalibration der Rohrabschnittsenden vermindert oder verhindert werden kann.

Insbesondere die Verwendung einer gegenüber dem hydromechanisch plattierten Rohrabschnitt, deren Innenrohr verfahrensbedingt eine Dicke von größer oder gleich 3 mm aufweist, vergleichsweise dünnen Beschichtung führt zu einem geringeren Bedarf an besonders kostenintensiven Legierungselementen und damit zu einer ökonomischen Überlegenheit gegenüber einem hydromechanisch plattierten Rohrabschnitt, welcher diese bereits seinerseits aufgrund des eingesetzten Vormaterials und des Herstellungsverfahrens gegenüber einem metallurgisch plattierten Rohrabschnitt aufweist.

Zusammengefasst kann durch den hier vorgeschlagenen Rohrabschnitt eine Optimierung für höchste Anforderungen an Festigkeit und/oder Korrosionsbeständigkeit und/oder Beständigkeit gegen abrasiven Verschleiß und/oder Wirtschaftlichkeit erreicht werden. Dabei erfüllt die aus dem Grundwerkstoff bestehende Trägerschicht die statischen und/oder dynamischen mechanischen Anforderungen und die erste und zweite Beschichtung wirken der Korrosion und/oder dem abrasiven Verschleiß entgegen.

Gemäß einer besonders bevorzugten Ausführungsform weist die zweite Beschichtung eine zweite Dicke von größer oder gleich 100 µm auf, bevorzugt eine zweite Dicke von größer oder gleich 200 µm und besonders bevorzugt eine zweite Dicke von größer oder gleich 400 µm.

Die zweite Beschichtung kann eine zweite Dicke von größer oder gleich 150 µm aufweisen, vorzugsweise eine zweite Dicke von größer oder gleich 300 µm, weiterhin bevorzugt eine zweite Dicke von größer oder gleich 500 µm und besonders bevorzugt eine zweite Dicke von größer oder gleich 600 µm. Weiterhin kann die zweite Beschichtung eine zweite Dicke von größer oder gleich 750 µm aufweisen, vorzugsweise eine zweite Dicke von größer oder gleich 1.000 µm, weiterhin bevorzugt eine zweite Dicke von größer oder gleich 1.500 µm und besonders bevorzugt eine zweite Dicke von größer oder gleich 2.500 µm.

Mit den hier geforderten Minimalwerten für die zweite Dicke kann erreicht werden, dass eine hinreichende Beständigkeit gegen Korrosion und abrasiven Verschleiß sowie eine hinreichende Delaminationsbeständigkeit der zweiten Beschichtung erreicht werden kann.

Gemäß einer weiteren zweckmäßigen Ausführungsform weist die Trägerschicht an einer Innenkante einen Absatz auf.

Besonders bevorzugt kann die Längserstreckung des Absatzes der Längserstreckung der ersten Beschichtung entsprechen.

Durch einen Absatz kann erreicht werden, dass die Trägerschicht im Bereich des Absatzes an der Innenoberfläche keine Ovalität mehr aufweist, wodurch ein designiertes Verbinden mehrerer Rohrabschnitte zu einer Rohranordnung erleichtert werden kann.

Es hat sich in einigen Ausführungsformen als vorteilhaft erwiesen, dass die Dicke der ersten Beschichtung größer ist als die Dicke der zweiten Beschichtung. Durch den hier vorgeschlagenen Absatz kann erreicht werden, dass ein weitestgehend geradliniger Verlauf der Innenoberfläche des Rohrabschnitts im Bereich des Übergangs von der ersten Beschichtung auf die zweite Beschichtung erreicht werden kann, trotz unterschiedlicher Beschichtungsdicken. Hierdurch kann der designierte Strömungswiderstand des Rohrabschnittes vorteilhaft reduziert werden.

Bevorzugt weist die Trägerschicht und/oder die erste Beschichtung an einer Innenkante und/oder einer Außenkante eine Fase auf.

Hierdurch kann eine Verschweißung mehrerer Rohrabschnitte zu einer Rohranordnung unterstützt werden. Insbesondere können homogene Verbindungsschweißnahtaußenflächen mit einer geringeren oder keiner Schweißnahtüberhöhung erreicht werden, insbesondere für die erste Beschichtung. Auf diese Weise können die Eigenschaften der ersten Beschichtung auch nach dem Verschweißen zu einer Rohranordnung erhalten bleiben und ein vorteilhaft geringer Strömungswiderstand in dem Bereich der vorherigen Rohrabschnittenden erreicht werden.

Bevorzugt ist die erste Beschichtung mit einem Auftragsschweißverfahren auf die Trägerschicht aufgebracht, insbesondere mit einem Laserauftragsschweißverfahren.

Begrifflich sei hierzu Folgendes erläutert:
Unter "Auftragsschweißen" wird ein Schweißen verstanden, bei welchem ausschließlich durch den Schweißzusatzwerkstoff ein Volumenaufbau, meist in Form einer Deckschicht, stattfindet. Es zählt somit zum Beschichten.

Als Auftragsschweißverfahren für die erste Beschichtung kommt unter anderem ein herkömmliches Auftragsschweißverfahren in Frage, insbesondere ein klassische Drahtschmelzschweißverfahren, mit dem vorteilhaft hohe Schichtdicken erzielbar sind.

Beim "Laserauftragsschweißen" dient als Wärmequelle ein Laser hoher Leistung. Hierdurch kann vorteilhaft eine im Vergleich zu anderen Auftragsschweißverfahren geringe Einbrandtiefe erreicht werden.

Besonders bevorzugt weist die erste Beschichtung eine Einbrandtiefe von kleiner oder gleich 500 µm auf, bevorzugt eine Einbrandtiefe von kleiner oder gleich 150 µm und besonders bevorzugt eine Einbrandtiefe von kleiner oder gleich 75 µm.

Weiterhin kann die die erste Beschichtung eine Einbrandtiefe von kleiner oder gleich 250 µm aufweisen, vorzugsweise eine Einbrandtiefe von kleiner oder gleich 100 µm, bevorzugt eine Einbrandtiefe von kleiner oder gleich 40 µm und besonders bevorzugt eine Einbrandtiefe von kleiner oder gleich 25 µm.

Während im Grundwerkstoff die Materialeigenschaften erhalten bleiben, ändern sich die Materialeigenschaften in der durch das Auftragsschweißverfahren benötigten Wärmeeinflusszone durch Kornwachstum, Phasenumwandlungen, Ausscheidungsvorgänge an den Korngrenzen oder auch Aufhärtungen die physikalischen Materialeigenschaften, ebenso im Schweißgut durch Kristallisation (Bildung eines Gussgefüges), Lösungserscheinungen von Begleitelementen, Ausscheidungsvorgängen, Seigerungen, Schrumpfung und entstehenden Eigenspannungen. Je kleiner die Einbrandtiefe ist, desto kleiner ist auch die Wärmeeinflusszone und damit je kleiner der Energieeintrag in den Grundwerkstoff der Trägerschicht.

Auch der zur ersten Beschichtung aufgebrachte Schweißzusatzwerkstoff erfährt durch die bei kleinerer Einbrandtiefe geringere Aufmischung mit Eisen eine homogenere Gefügezusammensetzung mit geringem Eisenanteil und die Eigenschaften des Schweißzusatzwerkstoffes bleiben auch nach dem Auftragsschweißen noch weitgehend erhalten.

Insofern ist eine möglichst kleine Einbrandtiefe vorteilhaft.

Zweckmäßig weist die erste Beschichtung eine erste Dicke von kleiner oder gleich 2.500 µm auf, bevorzugt eine erste Dicke von kleiner oder gleich 1.000 µm und besonders bevorzugt eine erste Dicke von kleiner oder gleich 600 µm.

Weiterhin kann die erste Beschichtung eine erste Dicke von kleiner oder gleich 5.000 µm aufweisen, vorzugsweise eine erste Dicke von kleiner oder gleich 1.500 µm, bevorzugt eine erste Dicke von kleiner oder gleich 750 µm und besonders bevorzugt eine erste Dicke von kleiner oder gleich 550 µm.

Die hier geforderten Werte für die erste Dicke der ersten Beschichtung ermöglichen eine vorteilhaft Dünne erste Beschichtung, wodurch Materialkosten für den ersten Beschichtungswerkstoff und Kosten für das Aufbringen der ersten Beschichtung reduziert werden können.

Optional weist die erste Beschichtung eine erste Dicke von größer oder gleich 500 µm auf, bevorzugt eine erste Dicke von größer oder gleich 600 µm und besonders bevorzugt eine erste Dicke von größer oder gleich 700 µm.

Weiterhin optional weist die erste Beschichtung eine erste Dicke von größer oder gleich 400 µm auf, bevorzugt eine erste Dicke von größer oder gleich 550 µm und besonders bevorzugt eine erste Dicke von größer oder gleich 650 µm.

Bei der Verwendung mehrerer Rohrabschnitte für eine Rohranordnung ist es vorteilhaft diese Rohrabschnitte durch ein Verschweißen der korrespondierenden Rohrabschnittenden miteinander stoffschlüssig zu verbinden. Dabei weisen die Trägerschicht und die erste Beschichtung unterschiedliche Werkstoffe auf, welche zumindest in einer Übergangsschicht verfahrensbedingt miteinander vermischt sind. Insbesondere an der Innenoberfläche der ersten Beschichtung ist es für die Eigenschaften der ersten Beschichtung vorteilhaft, wenn die erste Beschichtung nur noch oder zumindest überwiegend aus dem ersten Beschichtungswerkstoff besteht. Auch beim Verschweißen einer Mehrzahl von Rohrabschnitten zu einer Rohranordnung kann es zu einer weiteren Aufmischung von Grundwerkstoff und erstem Beschichtungswerkstoff kommen, wodurch die Eigenschaften der ersten Beschichtung nachteilig beeinflusst werden können.

Die hier geforderten Werte für die erste Dicke der ersten Beschichtung können ermöglichen, dass an der Innenoberfläche der ersten Beschichtung eines Rohrabschnitts oder einer Rohranordnung nur noch oder zumindest überwiegend der erste Beschichtungswerkstoff vorliegt.

Gemäß einer zweckmäßigen Ausführungsform weist die erste Beschichtung eine Längserstreckung von größer oder gleich 30 mm auf, bevorzugt eine Längserstreckung von größer oder gleich 50 mm und besonders bevorzugt eine Längserstreckung von größer oder gleich 65 mm.

Zweckmäßig kann die erste Beschichtung eine Längserstreckung von größer oder gleich 15 mm aufweisen, vorzugsweise eine Längserstreckung von größer oder gleich 20 mm, bevorzugt eine Längserstreckung von größer oder gleich 40 mm und besonders bevorzugt eine Längserstreckung von größer oder gleich 60 mm. Weiterhin zweckmäßig kann die erste Beschichtung eine Längserstreckung von größer oder gleich 70 mm aufweisen, vorzugsweise eine Längserstreckung von größer oder gleich 80 mm, bevorzugt eine Längserstreckung von größer oder gleich 90 mm und besonders bevorzugt eine Längserstreckung von größer oder gleich 100 mm.

Beim stoffschlüssigen Verbinden mehrerer Rohrabschnitte zu einer Rohranordnung kommt es an den jeweiligen Rohrabschnittenden und in den korrespondierenden Endbereichen zu einem Wärmeeintrag. Dieser kann sich negativ auf die Eigenschaften der zweiten Beschichtung auswirken. Die hier geforderten Werte für die Längserstreckung der ersten Beschichtung kann einen Wärmeeintrag durch das Verschweißen mehrerer Rohrabschnitte miteinander in die zweite Beschichtung so weit reduzieren, dass die Eigenschaften der zweiten Beschichtung hierdurch nicht mehr oder zumindest nicht mehr maßgeblich beeinflusst werden.

Gemäß einer bevorzugten Ausführungsform weist die erste Beschichtung eine mit dem Umfangswinkel des Rohrabschnitts variierende erste Dicke auf.

Dabei kann die erste Dicke insbesondere mit dem Umfangswinkel in dem Rohrabschnitt variieren. Hierdurch kann eine etwaige Ovalität der Trägerschicht durch eine variierende Dicke der ersten Beschichtung reduziert werden.

Hierdurch kann eine Herstellung einer Rohranordnung nach dem vierten Aspekt der Erfindung vereinfacht werden und/oder ein auf ein designiert die Rohranordnung durchströmendes Fluid wirkender Strömungswiderstand reduziert werden.

Besonders bevorzugt ist die zweite Beschichtung mit einem Lichtbogenspritzverfahren auf die Trägerschicht aufgespritzt.

Begrifflich sei hierzu Folgendes erläutert:
Unter "Lichtbogenspritzverfahren" wir ein Drahtspritzverfahren verstanden, bei welchem elektrisch leitende Werkstoffe zur Herstellung einer Beschichtung verspritzt werden. Dabei wird zwischen zwei drahtförmigen Spritzwerkstoffen gleicher oder unterschiedlicher Art ein Lichtbogen gezündet. Die Drahtspitzen werden bei einer Temperatur von bis zu rund 4000 °C abgeschmolzen und mittels einem Zerstäubergas auf die Werkstückoberfläche geblasen. Bei der Verwendung von Stickstoff oder Argon statt Luft als Zerstäubergas kann eine Oxidation der Materialien vorteilhaft reduziert werden.

Durch Verwendung des Lichtbogenspritzverfahrens kann die Auftragsrate der zweiten Beschichtung vorteilhaft erhöht werden. Weiterhin ist es möglich jede elektrisch leitfähige Drahtlegierung vorteilhaft als Beschichtungsmaterial zu verwenden. Es kann besonders vorteilhaft eine sehr dünne zweite Dicke der zweiten Beschichtung von größer oder gleich 50 µm erreicht werden. Die mit einem Lichtbogenspritzverfahren hergestellte zweite Beschichtung ist gemäß durchgeführter Versuche besonders robust und zuverlässig.

Durch Verwendung des Lichtbogenspritzverfahrens kann eine variable zweite Dicke erreicht werden, sodass eine Anpassung an lokale Bedürfnisse erreicht werden kann. Dies kann sich insbesondere vorteilhaft im Übergang von der ersten Beschichtung zu der zweiten Beschichtung auswirken, sodass ein robuster Schichtübergang und/oder ein möglichst kleiner Strömungswiderstand gewährleistet werden können, wobei die mit dem Lichtbogenspritzverfahren aufgetragene zweite Beschichtung die erste Beschichtung zumindest teilweise überlappt. Weiterhin kann eine variable Schichtdicke zur Reduzierung der Innenovalität des Rohrabschnittes beitragen.

Vorteilhaft kann mit dem Lichtbogenspritzverfahren eine metallische Beschichtung aufgetragen werden, welche eine vorteilhafte Härte, Abrasionsfestigkeit und Kaltschlagfestigkeit aufweist.

Bevorzugt weist die erste Beschichtung und/oder die zweite Beschichtung einen Nickelanteil von größer oder gleich 38 Gew.-% auf, bevorzugt einen Nickelanteil von größer oder gleich 48 Gew.-% und besonders bevorzugt einen Nickelanteil von größer oder gleich 58 Gew.-%, und/oder einen Nickelanteil von kleiner oder gleich 75 Gew.-%, bevorzugt einen Nickelanteil von kleiner oder gleich 70 Gew.-% und besonders bevorzugt einen Nickelanteil von kleiner oder gleich 65 Gew.-%.

Durch den Nickelanteil kann erreicht werden, dass die erste Beschichtung und/oder die zweite Beschichtung eine hohe Korrosionsbeständigkeit und/oder eine hohe Härte und/oder eine hohe Zähigkeit und/oder eine hohe Duktilität aufweisen.

Ein erster Beschichtungswerkstoff und/oder zweiter Beschichtungswerkstoff kann unter anderem Inconel Alloy 625 (auch als AISI Alloy 625, UNS N06625, NiCr22Mo9Nb und/oder EN 2.4856 bekannt), Inconel Alloy 825, Inconel Alloy 59, Inconel Alloy 926 und/oder Inconel Alloy 367 sein.

Inconel Alloy 625 ist eine Legierung auf Nickelbasis, die sich durch hohe Festigkeitseigenschaften und Beständigkeit gegen hohe Temperaturen auszeichnet. Außerdem weist sie einen bemerkenswerten Schutz gegen Korrosion, auch in stark sauren Umgebungen, und Oxidation auf. Weiterhin weist die Legierung eine sehr gute Kriechfestigkeit und eine sehr gute Schweißfähigkeit auf.

Konkret kann der Grundwerkstoff der Trägerschicht ein Werkstoff gemäß dem API-Standard (American-Petroleum-Institute) sein, insbesondere ein X42, ein X52, ein X60, ein X65, ein X70, ein X80 oder ein Grundwerkstoff mit einem höheren Anteil von Legierungselementen. Weiterhin kann der metallische Grundwerkstoff gemäß der DIN EN 10208-2 ein L 360QB, ein L 415QB, ein L 450QB oder ein L 485QB sein, wobei dieser Grundwerkstoff mit einer ersten Beschichtung und/oder einer zweiten Beschichtung aus Alloy 625 beschichtet ist. Mit anderen Worten sei an eine Trägerschicht aus einem X42 oder einem Grundwerkstoff der obigen Liste mit einer höheren Streckgrenze als X42 gedacht, welche mit einer ersten Beschichtung und/oder einer zweiten Beschichtung aus Alloy 625 beschichtet ist.

Bevorzugt weist die erste Beschichtung und/oder die zweite Beschichtung einen Chromanteil von größer oder gleich 12 Gew.-% auf, bevorzugt einen Chromanteil von größer oder gleich 16 Gew.-% und besonders bevorzugt einen Chromanteil von größer oder gleich 20 Gew.-%, und/oder einen Chromanteil von kleiner oder gleich 31 Gew.-%, bevorzugt einen Chromanteil von kleiner oder gleich 27 Gew.-% und besonders bevorzugt einen Chromanteil von kleiner oder gleich 23 Gew.-%.

Durch den Chromanteil kann die erste Beschichtung und/oder die zweite Beschichtung eine besonders stark ausgeprägte Korrosionsbeständigkeit und/oder eine besonders gute Hitzebeständigkeit aufweisen.

Weiterhin bevorzugt weist die erste Beschichtung und/oder die zweite Beschichtung einen Molybdänanteil von größer oder gleich 2 Gew.-% auf, bevorzugt einen Molybdänanteil von größer oder gleich 5 Gew.-% und besonders bevorzugt einen Molybdänanteil von größer oder gleich 8 Gew.-%, und/oder einen Molybdänanteil von kleiner oder gleich 17 Gew.-%, bevorzugt einen Molybdänanteil von kleiner oder gleich 13 Gew.-% und besonders bevorzugt einen Molybdänanteil von kleiner oder gleich 10 Gew.-%.

Durch den vorgeschlagenen Molybdänanteil kann die Säurebeständigkeit und damit die Korrosionsbeständigkeit der ersten Beschichtung und/oder der zweiten Beschichtung verbessert werden. Weiterhin kann mit dem hier vorgeschlagenen Molybdänanteil die Härte und die Festigkeit der ersten Beschichtung und/oder zweiten Beschichtung und damit die Widerstandsfähigkeit gegenüber abrasivem Verschleiß erhöht werden. Außerdem kann durch den Molybdänteil die Anlassversprödung der ersten Beschichtung und/oder der zweiten Beschichtung verhindert oder vermindert werden.

Mit anderen Worten kann durch den Molybdänanteil die Festigkeit, die Korrosions- und die Hitzebeständigkeit der ersten Beschichtung und/oder der zweiten Beschichtung verbessert werden.

Optional weist die erste Beschichtung und/oder die zweite Beschichtung einen Anteil von Niob in Kombination mit Tantal von größer oder gleich 2 Gew.-% auf, bevorzugt einen Anteil von Niob in Kombination mit Tantal von größer oder gleich 2,6 Gew.-% und besonders bevorzugt einen Anteil von Niob in Kombination mit Tantal von größer oder gleich 3,15 Gew.-%, und/oder einen Anteil von Niob in Kombination mit Tantal von kleiner oder gleich 6 Gew.-%, bevorzugt einen Anteil von Niob in Kombination mit Tantal von kleiner oder gleich 5 Gew.-% und besonders bevorzugt einen Anteil von Niob in Kombination mit Tantal von kleiner oder gleich 4,15 Gew.-%.

Vorteilhaft kann durch den Anteil von Niob die Schweißbarkeit der ersten Beschichtung und/oder zweiten Beschichtung verbessert werden. Auf Grund der Ähnlichkeit von Niob und Tantal enthalten Nioberze überwiegend auch Tantal, weshalb es vorteilhaft ist, das Tantal nicht von dem Niob zu separieren und eine Kombination von Niob und Tantal als Legierungselemente der ersten Beschichtung und/oder der zweiten Beschichtung zuzusetzen.

Besonders bevorzugt weist die erste Beschichtung und/oder die zweite Beschichtung eine Härte nach Vickers, gemessen bei 20°C, von größer oder gleich 150 HV auf, bevorzugt eine Härte nach Vickers von größer oder gleich 200 HV und besonders bevorzugt eine Härte nach Vickers von größer oder gleich 250 HV.

Unter einer "Härte" wird der mechanische Widerstand verstanden, den die erste Beschichtung und/oder die zweite Beschichtung der mechanischen Eindringung eines anderen Körpers entgegensetzt. Die Härte nach Vickers entspricht der Härte entsprechend der nach dem Unternehmen Vickers benannten Härteprüfung, welche sich durch die flache Gestalt des Prüfkörpers insbesondere für dünnwandige Beschichtungen anbietet.

Durch die Auswahl eines Beschichtungswerkstoffes mit einer Härte von größer oder gleich dem hier geforderten Wert kann insbesondere die Beständigkeit gegenüber abrasivem Verschleiß erhöht werden.

Weiterhin besonders bevorzugt weist die erste Beschichtung und/oder die zweite Beschichtung eine Bruchdehnung A, gemessen bei 20°C, von größer oder gleich 25 % auf, bevorzugt eine Bruchdehnung A von größer oder gleich 30 % und besonders bevorzugt eine Bruchdehnung A von größer oder gleich 35 %.

Begrifflich sei hierzu Folgendes erläutert:
Die "Bruchdehnung A" ist ein Kennwert der Werkstoffwissenschaften, der nach einachsiger mechanischer Belastung die bleibende Verlängerung der Zugprobe nach dem Bruch, bezogen auf die Anfangsmesslänge, angibt. Je höher der Wert der Bruchdehnung eines Werkstoffes ist, desto höher ist auch die Duktilität oder die Verformungsfähigkeit des Werkstoffs

Wird die Streckgrenze eines Materials überschritten, dann gibt es in dessen Kristallgitter irreversible Veränderungen. Wird die Belastung auf das Material wieder weggenommen, so geht das Bauteil wieder in seine Ausgangslage zurück, wobei eine "plastische Dehnung" zurückbleibt.

Duktile Werkstoffe haben den Vorteil, dass plastische Dehnungen bis zu einer gewissen Grenze nicht zu einem Sprödbruch des aus dem Werkstoff hergestellten Werkstücks führen. Treten plastische Dehnungen im Rahmen des Lebenszyklus des Werkstücks auf, hier des Rohrabschnitts, sollte jedoch sichergestellt werden, dass das Werkstück nicht so stark plastisch gedehnt wird, dass eine Funktion des Werkstücks nicht mehr gewährleistet werden kann.

Bei einigen Anwendungsfällen der hier vorgeschlagenen Rohrabschnitte werden diese zunächst zu einer Rohranordnung miteinander verbunden, welche anschließend zum Transport aufgewickelt und nach dem Transport wieder abgewickelt wird. Dieses Aufwickeln erfordert von den verwendeten Materialien für die Trägerschicht, die erste Beschichtung und die zweite Beschichtung, dass sie sich zerstörungsfrei plastisch mit der Trägerschicht verformen lassen. Mit anderen Worten benötigen die Trägerschicht, die erste Beschichtung und die zweite Beschichtung eine ausreichende Duktilität, damit keine Sprödbrüche entstehen und/oder eine Delamination der Beschichtung an lokal plastisch verformten Stellen verhindert oder zumindest ausreichend vermindert werden kann.

Insbesondere für den zweiten Beschichtungswerkstoff hat sich unter Anwendungsbedingungen gezeigt, dass die hier geforderte Duktilität einer etwaigen Delamination des zweiten Beschichtungswerkstoffes entgegenwirken kann, auch wenn der Rohrabschnitt als Ganzes nicht plastisch verformt wird.

Gemäß einer zweckmäßigen Ausführungsform weist die erste Beschichtung und/oder die zweite Beschichtung eine Dehngrenze R_{p0,2}, gemessen bei 20°C, von größer oder gleich 280 N/mm² auf, bevorzugt eine Dehngrenze R_{p0,2} von größer oder gleich 300 N/mm² und besonders bevorzugt eine Dehngrenze R_{p0,2} von größer oder gleich 320 N/mm².

Begrifflich sei hierzu Folgendes erläutert:
Unter der "Dehngrenze R_{p0,2}", wird diejenige einachsige mechanische Spannung verstanden, bei der die auf die Anfangslänge der Probe bezogene zurückbleibende plastische Dehnung nach Entlastung 0,2 % beträgt. Die Dehngrenze R_{p0,2} ist damit ein Festigkeitskennwert für einen Werkstoff, insbesondere die erste Beschichtung und/oder die zweite Beschichtung.

Durch die hier geforderten Werte der Dehngrenze R_{p0,2} kann die erste Beschichtung und/oder die zweite Beschichtung besonders vorteilhaft an das Materialverhalten der Trägerschicht angepasst werden.

Kommt es zu einer elastischen und/oder plastischen Verformung der Trägerschicht, so wirkt sich diese Verformung auch auf die erste und/oder zweite Beschichtung aus. Sind die Dehngrenze R_{p0,2} von Trägerschicht und erster Beschichtung und/oder zweiter Beschichtung zu unterschiedlich, also insbesondere bei zu kleinen Werten für die Dehngrenze R_{p0,2} und bei zu großen Werten für die Dehngrenze R_{p0,2} für den ersten und/oder zweiten Beschichtungswerkstoff, so kann dies zu Eigenspannungen in der Trägerschicht und/oder der ersten Beschichtung und/oder der zweiten Beschichtung führen, wodurch eine Delamination der zweiten Beschichtung hervorgerufen werden kann.

Ist die Dehngrenze R_{p0,2} für den ersten und/oder zweiten Beschichtungswerkstoff niedriger als die Dehngrenze der Trägerschicht, so kann es vorkommen, dass sich die Trägerschicht im rein elastischen Bereich verformt, während die erste Beschichtung und/oder die zweite Beschichtung bereits eine plastische Dehnung erfahren. Entfällt die äußere Belastung für den Rohrabschnitt kann es insbesondere in einer Kontaktschicht von Trägerschicht und erster Beschichtung und/oder zweiter Beschichtung zu Eigenspannungen kommen.

Ist die Dehngrenze R_{p0,2} für den ersten und/oder zweiten Beschichtungswerkstoff höher als die Dehngrenze der Trägerschicht, so kann es vorkommen, dass sich die Trägerschicht plastisch verformt, während die erste Beschichtung und/oder die zweite Beschichtung eine rein elastische Verformung erfahren, wodurch ebenfalls Eigenspannungen in einer Kontaktschicht von Trägerschicht und erster Beschichtung und/oder zweiter Beschichtung auftreten können.

Durch die hier geforderten Werte für die Dehngrenze R_{p0,2} kann das Entstehen von Eigenspannungen in einer Kontaktschicht von Trägerschicht und erster Beschichtung und/oder zweiter Beschichtung in Folge einer Verformung des Rohrabschnitts verhindert oder zumindest verringert werden.

Zweckmäßig weist die erste Beschichtung und/oder die zweite Beschichtung eine Zugfestigkeit Rₘ, gemessen bei 20°C, von größer oder gleich 650 N/mm² auf, bevorzugt eine Zugfestigkeit Rₘ von größer oder gleich 685 N/mm² und besonders bevorzugt eine Zugfestigkeit Rₘ von größer oder gleich 720 N/mm².

Begrifflich sei hierzu Folgendes erläutert:
Unter der "Zugfestigkeit Rₘ" wird die maximale einachsige mechanische Spannung verstanden, die der Werkstoff bis zum Versagen aushält.

Durch die hier geforderten Werte für die Zugfestigkeit Rₘ des ersten und/oder zweiten Beschichtungswerkstoffes kann die Bildung von Rissen in der ersten Beschichtung und/oder zweiten Beschichtung unter gewöhnlichen Einsatzbedingungen und/oder beim Aufwickeln und/oder Abwickeln einer Rohranordnung verhindert oder zumindest stark vermindert werden.

Gemäß einer bevorzugten Ausführungsform weist die erste Beschichtung und/oder die zweite Beschichtung eine Versiegelung auf.

Begrifflich sei hierzu Folgendes erläutert:
Beschichtungen, insbesondere Beschichtungen hergestellt mit einem thermischen Spritzverfahren, können eine Porosität aufweisen. Hierdurch kann eine Beschichtung Öffnungen an der Oberfläche der Beschichtung aufweisen, welche mit Kapillarräumen innerhalb der Beschichtung kommunizieren, sodass ein designiertes Fluid innerhalb des Rohrabschnittes in Kapillarräume im Inneren der Beschichtung eindringen kann, wodurch Korrosion und/oder abrasiver Verschleiß nachteilig beeinflusst werden können. Unter einer "Versiegelung" wird ein zumindest teilweises Auffüllen von Öffnungen in der Oberfläche der ersten Beschichtung und/oder der zweiten Beschichtung sowie von kommunizierenden Kapillarräumen verstanden.

Durch die hier vorgeschlagene Versiegelung können Öffnungen und mit ihnen kommunizierende Kapillarräume in der Oberfläche der ersten Beschichtung und/oder der zweiten Beschichtung vorteilhaft zumindest teilweise aufgefüllt werden, sodass nach der Versiegelung ein Eindringen eines designierten Fluids in dem Rohrabschnitt in den Kapillarraum verhindert oder zumindest verringert werden kann. Auf diese Weise kann der Korrosionsschutz der ersten Beschichtung und/oder der zweiten Beschichtung verbessert werden.

Optional ist die Versiegelung polymerbasiert.

Unter einer "polymerbasierten Versiegelung" wird eine Versiegelung mit einem Werkstoff verstanden, welcher aus Makromolekülen besteht.

Hierdurch kann eine Versiegelung mit einer vorteilhaft geringen Viskosität des Versiegelungswerkstoffs zum Zeitpunkt der Verarbeitung und mit einer vorteilhaft hohen Viskosität nach der Verarbeitung erreicht werden, sodass der Versiegelungswerkstoff einerseits vorteilhaft in kleine Öffnungen und Kapillarräume eindringen kann und andererseits nach dem Eindringen zu einer besonders harten und robusten Struktur ausgehärtet werden kann.

Nach einem zweiten Aspekt der Erfindung löst die Aufgabe eine Rohranordnung aus zumindest zwei Rohrabschnitten gemäß dem ersten Aspekt der Erfindung, wobei ein erster Rohrabschnitt und ein zweiter Rohrabschnitt an zwei korrespondierenden Rohrabschnittenden stoffschlüssig miteinander verbunden sind.

Eine weitverbreitete Verwendung eines oder mehrerer Rohrabschnitte gemäß dem ersten Aspekt der Erfindung besteht darin, diese als Rohranordnung zum Befördern von Öl und/oder Gas und/oder einem flüssigen fossilen Energieträger zu verwenden. Hierzu ist es vorteilhaft eine Mehrzahl von Rohrabschnitten zu einer Rohranordnung zu verbinden, insbesondere zwei Rohrabschnitte, drei Rohrabschnitte, vier Rohrabschnitte, fünf Rohrabschnitte oder mehr als fünf Rohrabschnitte.

Hinsichtlich der Verbindung der Rohrabschnitte ist es besonders vorteilhaft diese stoffschlüssig miteinander zu verbinden, wodurch eine äußerst robuste Verbindung erzielt werden kann, auch gegenüber seismischen Ereignissen.

Die stoffschlüssige Verbindung kann dabei so ausgeführt sein, dass die Rohranordnung auf der Innenseite eine durchgehende Beschichtung mit korrosionsfesten und/oder gegen abrasiven Verschleiß schützenden Eigenschaften aufweist, insbesondere durch eine durchgehende Kombination von alternierend angeordneten ersten und zweiten Beschichtungen. Vorzugsweise sind dabei die ersten Beschichtungen von aneinander angrenzenden Rohrabschnitten derart stoffschlüssig miteinander verschweißt, dass der Bereich der Schweißverbindung keinen oder nur einen geringen stofflichen Unterschied zu dem angrenzenden Werkstoff der ersten Beschichtungen aufweist.

Es versteht sich, dass sich die Vorteile eines Rohrabschnittes nach dem ersten Aspekt der Erfindung, wie vorstehend beschrieben, unmittelbar auf eine Rohranordnung aufweisend einen ersten Rohrabschnitt und zumindest einen zweiten Rohrabschnitt jeweils gemäß dem ersten Aspekt der Erfindung erstrecken.

Es sei ausdrücklich darauf hingewiesen, dass der Gegenstand des zweiten Aspekts mit dem Gegenstand des vorstehenden Aspekts der Erfindung vorteilhaft kombinierbar ist, und zwar sowohl einzeln oder in beliebiger Kombination kumulativ.

Nach einem dritten Aspekt der Erfindung löst die Aufgabe ein Verfahren zum Herstellen eines Rohrabschnitts gemäß dem ersten Aspekt der Erfindung, entsprechend Anspruch 11, mit nachfolgenden Schritten:
- Bereitstellen einer Trägerschicht bestehend aus einem metallischen Grundwerkstoff, wobei die Trägerschicht eine Länge, einen Innendurchmesser, eine Innenfläche, eine Außenfläche zumindest zwei Rohrabschnittenden mit jeweils einem Endbereich und einen Zwischenbereich aufweist;
- Aufrauen der Trägerschicht auf der Innenfläche;
- Aufbringen einer ersten Beschichtung in jedem Endbereich der Innenfläche der Trägerschicht, insbesondere mit einem Laserauftragsschweißverfahren; und
- Aufbringen einer zweiten Beschichtung in dem Zwischenbereich der Innenfläche der Trägerschicht, insbesondere mit einem Lichtbogenspritzverfahren.

Die Trägerschicht wird zumindest in dem Bereich der Innenfläche, welcher später mit der Beschichtung, insbesondere der zweiten Beschichtung, beschichtet werden soll, vorab aufgeraut. Dabei kann eine Strahlmittel verwendet werden, welches mit einer durchschnittlichen Korngröße und einem in gewissen Grenzen vorbestimmten Strahldruck mit dem korrespondierenden Bereich der Innenfläche in Kontakt gebracht wird. Das Strahlmittel kann Strahlkies und/oder Korund und/oder Edelkorund und/oder Zirkonkorund und/oder Flint und/oder Quarz und/oder Granat und/oder Diamant und/oder Siliziumcarbid und/oder Chromoxid und/oder Bornitrid aufweisen.

Durch das Aufrauen der Innenfläche kann die Anhaftung zwischen der Trägerschicht und der Beschichtung, insbesondere der zweiten Beschichtung, verbessert werden.

Vor dem Aufbringen der Beschichtung, insbesondere der ersten Beschichtung, kann die Trägerschicht mit einem Absatz versehen werden, insbesondere in dem Bereich der Innenfläche in welchem die Beschichtung, insbesondere die erste Beschichtung, designiert aufgebracht werden soll.

Die Beschichtung, insbesondere die erste Beschichtung, kann mit einer variierenden Dicke, insbesondere ersten Dicke, aufgetragen werden, insbesondere in Abhängigkeit des Umfangswinkels des Rohrabschnitts. Hierdurch kann die Ovalität des Rohrabschnitts vorteilhaft reduziert werden, sodass eine Kalibration des Rohrabschnittendes verhindert oder hinsichtlich ihres Aufwandes vermindert werden kann.

Die erste Beschichtung kann nachdem sie aufgebracht wurde nachbearbeitet werden, insbesondere mit einem spanabhebenden Verfahren und/oder einem glättenden Verfahren.

Bei dem Aufbringen der Beschichtung, insbesondere der zweiten Beschichtung, kann diese zusätzlich zu dem Zwischenbereich auch zumindest teilweise überlappend auf die erste Beschichtung aufgetragen werden.

Nach dem Auftragen der Beschichtung, insbesondere der zweiten Beschichtung, kann die Beschichtung, insbesondere die erste Beschichtung und/oder die zweite Beschichtung, mit einer Versiegelung versehen werden.

Nach dem Aufbringen der Beschichtung, insbesondere der ersten Beschichtung, können die Rohrabschnittenden überarbeitet werden. Vorzugsweise können die Rohrabschnittenden mit einem spanabhebenden Verfahren eben überarbeitet werden, sodass die Rohrabschnittenden eine vollständig ebene Oberfläche aufweisen. Dabei kann der Rohrabschnitt auch mit einer Fase versehen werden, insbesondere einer Fase an der Außenkante des Rohrabschnitts und/oder einer Fase an der Innenkante des Rohrabschnitts. Weiterhin oder zusätzlich können die Rohrabschnittenden mit einem glättenden Bearbeitungsverfahren nachbearbeitet werden.

Der Rohrabschnitt kann nach dem Aufbringen der Beschichtung, insbesondere der ersten Beschichtung, kalibriert werden, sodass die Ovalität eines Rohrabschnittendes nach der Kalibration innerhalb geforderter Toleranzen ist.

Es versteht sich, dass sich die Vorteile eines Rohrabschnittes nach dem ersten Aspekt der Erfindung, wie vorstehend beschrieben, unmittelbar auf ein Verfahren zum Herstellen eines Rohrabschnitts gemäß dem ersten Aspekt der Erfindung erstrecken.

Optional wird die Trägerschicht auf der Innenfläche vor dem Aufbringen der ersten Beschichtung und/oder der zweiten Beschichtung auf eine Temperatur von größer oder gleich 20°C vorerwärmt, bevorzugt auf eine Temperatur von größer oder gleich 40°C und besonders bevorzugt auf eine Temperatur von größer oder gleich 70°C.

Weiterhin optional wird die Trägerschicht auf der Innenfläche vor dem Aufbringen der ersten Beschichtung und/oder der zweiten Beschichtung auf eine Temperatur von größer oder gleich 50°C vorerwärmt, bevorzugt auf eine Temperatur von größer oder gleich 60°C und besonders bevorzugt auf eine Temperatur von größer oder gleich 80°C.

Ein derartiges Vorwärmen bewirkt, dass die Trägerschicht vor dem Aufbringen der zweiten Beschichtung ausgasen kann, wodurch die Anhaftung der zweiten Beschichtung an der Trägerschicht verbessert und eine einwandfreie Oberfläche der zweiten Beschichtung erreicht werden kann.

Es sei ausdrücklich darauf hingewiesen, dass der Gegenstand des dritten Aspekts mit dem Gegenstand der vorstehenden Aspekte der Erfindung vorteilhaft kombinierbar ist, und zwar sowohl einzeln oder in beliebiger Kombination kumulativ.

Besonders bevorzugt wird eine Dicke der Beschichtung, insbesondere eine zweite Dicke einer zweiten Beschichtung, in Abhängigkeit eines Umfangswinkels des Rohrabschnitts und/oder einer Längserstreckung des Rohrabschnitts variierend aufgebracht, insbesondere mit einer Varianz von größer oder gleich 3 % bezogen auf die maximale Dicke, insbesondere zweite Dicke, bevorzugt mit einer Varianz von größer oder gleich 5 % bezogen auf die maximale Dicke, insbesondere zweite Dicke, und besonders bevorzugt mit einer Varianz von größer oder gleich 10 % bezogen auf die maximale Dicke, insbesondere zweite Dicke.

Mit anderen Worten wird hier vorgeschlagen, die Dicke der Beschichtung, insbesondere die zweite Dicke der zweiten Beschichtung, bereichsweise zu variieren, insbesondere in Abhängigkeit des Umfangswinkels und/oder der Längserstreckung der Beschichtung, insbesondere zweiten Beschichtung.

Hierdurch kann die Beschichtung, insbesondere zweite Beschichtung, besonders vorteilhaft an erwartete Einsatzbedingungen des Rohrabschnitts angepasst werden. So kann die Dicke der Beschichtung, insbesondere die zweite Dicke der zweiten Beschichtung, an lokale Korrosionsbedingungen und/oder lokale Abrasionsbedingungen angepasst werden.

Dieser Aspekt kann sich analog auch auf die erste Dicke der ersten Beschichtung erstrecken, welche in Abhängigkeit des Umfangswinkels und/oder der Längserstreckung der ersten Beschichtung variierend aufgetragen werden kann.

Hierdurch kann ein Rohrabschnitt bedarfsgerecht an die erwarteten Einsatzbedingungen angepasst werden, wodurch Material und Kosten für die Beschichtung, insbesondere die erste Beschichtung und/oder die zweite Beschichtung, eingespart werden können, insbesondere im Abgleich zu metallurgisch plattierten Rohren oder hydromechanisch plattierten Rohren.

Gemäß einem weiteren Aspekt der Erfindung löst die Aufgabe ein Rohrabschnitt hergestellt mit einem Verfahren nach dem dritten Aspekt der Erfindung.

Es versteht sich, dass sich die Vorteile eines Verfahrens nach dem dritten Aspekt der Erfindung, wie vorstehend beschrieben, unmittelbar auf einen Rohrabschnitt hergestellt mit einem Verfahren gemäß dem dritten Aspekt der Erfindung erstrecken.

Nach einem vierten Aspekt der Erfindung löst die Aufgabe ein Verfahren zum Herstellen einer Rohranordnung aus zumindest zwei Rohrabschnitten gemäß dem zweiten Aspekt der Erfindung, wobei ein erster Rohrabschnitt und ein zweiter Rohrabschnitt an zwei korrespondierenden Rohrabschnittenden stoffschlüssig miteinander verbunden werden.

Es versteht sich, dass sich die Vorteile einer Rohranordnung gemäß dem zweiten Aspekt der Erfindung, wie vorstehend beschrieben, unmittelbar auf ein Verfahren zum Herstellen einer Rohranordnung gemäß dem zweiten Aspekt der Erfindung erstrecken.

Es sei ausdrücklich darauf hingewiesen, dass der Gegenstand des vierten Aspekts mit dem Gegenstand der vorstehenden Aspekte der Erfindung vorteilhaft kombinierbar ist, und zwar sowohl einzeln oder in beliebiger Kombination kumulativ.

Nach einem fünften Aspekt der Erfindung löst die Aufgabe (siehe Anspruch 15) eine Verwendung einer Rohranordnung gemäß dem zweiten Aspekt der Erfindung zum Befördern eines ölhaltigen und/oder gashaltigen Fluids und/oder eines Fluids aufweisend einen flüssigen fossilen Energieträger.

Es versteht sich, dass sich die Vorteile einer Rohranordnung gemäß dem zweiten Aspekt der Erfindung, wie vorstehend beschrieben, unmittelbar auf eine Verwendung einer Rohranordnung gemäß dem zweiten Aspekt der Erfindung erstrecken.

Weitere Vorteile, und Merkmale der Erfindung ergeben sich nachfolgend aus den erläuterten Ausführungsbeispielen. Dabei zeigen im Einzelnen:
- Figur 1:: schematisch eine erste Ausführungsform eines Rohrabschnitts, wobei der Rohrabschnitt in einem Halbschnitt dargestellt ist; und
- Figur 2:: schematisch eine zweite Ausführungsform eines Rohrabschnitts, wobei der Rohrabschnitt in einem Halbschnitt dargestellt ist und wobei rechts der Bruchlinie lediglich die Trägerschicht abgebildet ist.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

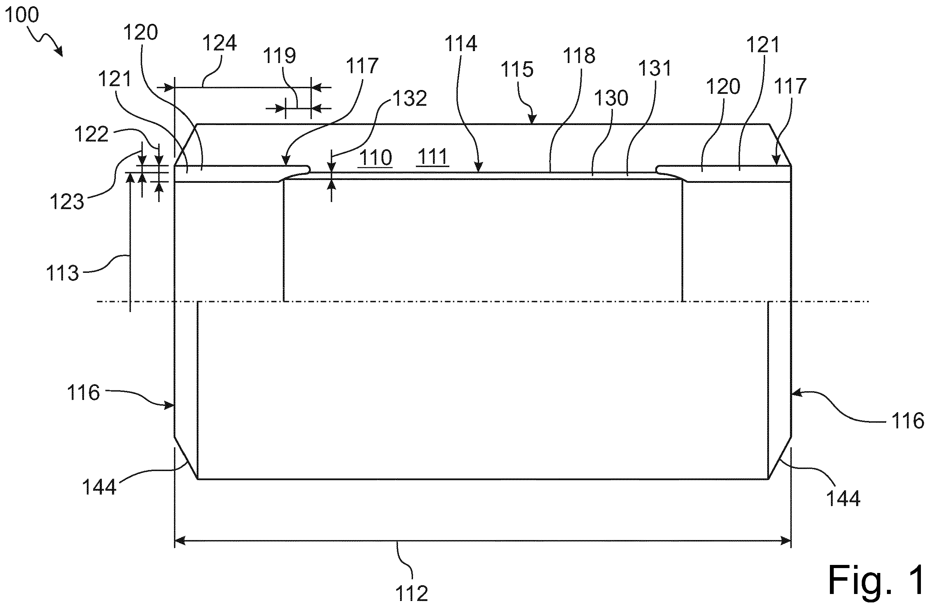

Die erste Ausführungsform eines Rohrabschnitts 100 in Figur 1, insbesondere eines Rohrabschnitts 100 zum Befördern von Öl und/oder Gas, besteht im Wesentlichen aus:
- einer Trägerschicht 110 aus einem metallischen Grundwerkstoff 111, wobei die Trägerschicht 110 eine Länge 112, einen Innendurchmesser 113, eine Innenfläche 114, eine Außenfläche 115 zumindest zwei Rohrabschnittenden 116 mit jeweils einem Endbereich 117 und einen Zwischenbereich 118 aufweist;
- einer ersten Beschichtung 120 aus einem ersten metallischen Beschichtungswerkstoff 121 in jedem Endbereich 117 der Innenfläche 114 der Trägerschicht 110, wobei die erste Beschichtung 120 mit der Trägerschicht 110 verschweißt ist, wobei die erste Beschichtung 120 eine erste Dicke 122, eine Einbrandtiefe 123 und eine Längserstreckung 124 aufweist; und
- einer zweiten Beschichtung 130 bestehend aus einem zweiten metallischen Beschichtungswerkstoff 131 in dem Zwischenbereich 118 der Innenfläche 114 der Trägerschicht 110, wobei die zweite Beschichtung 130 mit einem thermischen Spritzverfahren auf die Trägerschicht 110 aufgespritzt ist.

Die Trägerschicht 110 weist an der Innenfläche 114 eine Rauheit Rₐ von größer oder gleich 0,2 µm auf, bevorzugt eine Rauheit Rₐ von größer oder gleich 0,4 µm und besonders bevorzugt eine Rauheit Rₐ von größer oder gleich 0,8 µm.

Diese Rauheit an der Innenfläche 114 ist durch ein Strahlverfahren hergestellt worden, insbesondere durch ein Strahlverfahren unter Verwendung von Korund als Strahlmittel.

Die zweite Beschichtung 130 weist dabei eine zweite Dicke 132 von kleiner oder gleich 2.500 µm auf, bevorzugt eine zweite Dicke 132 von kleiner oder gleich 750 µm und besonders bevorzugt eine zweite Dicke 132 von kleiner oder gleich 500 µm.

Vorteilhaft kann die zweite Beschichtung 130 eine zweite Dicke 132 von größer oder gleich 100 µm aufweisen, bevorzugt eine zweite Dicke 132 von größer oder gleich 200 µm und besonders bevorzugt eine zweite Dicke 132 von größer oder gleich 400 µm.

Die erste Beschichtung 120 kann mit einem Auftragsschweißverfahren auf die Trägerschicht 110 aufgebracht sein, insbesondere mit einem Laserauftragsschweißverfahren. Hierbei kann sich für die erste Beschichtung 120 eine Einbrandtiefe 123 von kleiner oder gleich 500 µm ergeben, bevorzugt eine Einbrandtiefe 123 von kleiner oder gleich 150 µm und besonders bevorzugt eine Einbrandtiefe 123 von kleiner oder gleich 75 µm.

Die erste Beschichtung 120 kann eine erste Dicke 122 von kleiner oder gleich 2.500 µm aufweisen, bevorzugt eine erste Dicke 122 von kleiner oder gleich 1.000 µm und besonders bevorzugt eine erste Dicke 122 von kleiner oder gleich 600 µm.

Die erste Beschichtung 120 kann eine Längserstreckung 124 von größer oder gleich 30 mm aufweisen, bevorzugt eine Längserstreckung 124 von größer oder gleich 50 mm und besonders bevorzugt eine Längserstreckung 124 von größer oder gleich 65 mm.

Die erste Beschichtung 120 und/oder die zweite Beschichtung 130 kann eine Versiegelung aufweisen.

Der Rohrabschnitt 100 kann eine Fase 144 aufweisen.

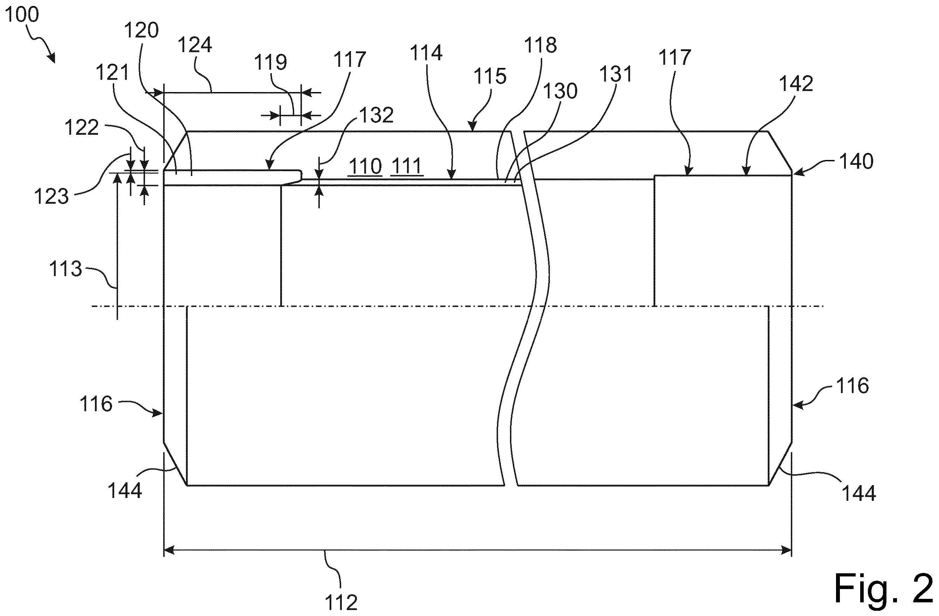

Die zweite Ausführungsform eines Rohrabschnitts 100 in Figur 2 ähnelt der ersten Ausführungsform in Figur 1, wobei die Trägerschicht 110 zusätzlich einen Absatz 142 aufweist. Hierdurch kann vorteilhaft erreicht werden, dass die erste Beschichtung 120 und die zweite Beschichtung 130 trotz unterschiedlicher erster Dicke 122 und zweiter Dicke 132 einen weitestgehend geradlinigen Verlauf der Innenoberfläche (nicht bezeichnet) des Rohrabschnitts 100 im Bereich des Übergangs (nicht bezeichnet) und/oder der Überlappung 119 von der ersten Beschichtung 120 auf die zweite Beschichtung 130 aufweisen.

### Bezugszeichenliste

- 100: Rohrabschnitt
- 110: Trägerschicht
- 111: Grundwerkstoff
- 112: Länge
- 113: Innendurchmesser
- 114: Innenfläche
- 115: Außenfläche
- 116: Rohrabschnittende
- 117: Endbereich
- 118: Zwischenbereich
- 119: Überlappung
- 120: erste Beschichtung
- 121: erster Beschichtungswerkstoff
- 122: erste Dicke
- 123: Einbrandtiefe
- 124: Längserstreckung
- 130: zweite Beschichtung
- 131: zweiter Beschichtungswerkstoff
- 132: zweite Dicke
- 140: Innenkante
- 142: Absatz
- 144: Fase

## Patentansprüche

1. Rohrabschnitt (100), insbesondere Rohrabschnitt (100) zum Befördern von Öl und/oder Gas, aufweisend:
- eine Trägerschicht (110) bestehend aus einem metallischen Grundwerkstoff (111), wobei die Trägerschicht (110) eine Länge (112), einen Innendurchmesser (113), eine Innenfläche (114), eine Außenfläche (115) zumindest zwei Rohrabschnittenden (116) mit jeweils einem Endbereich (117) und einen Zwischenbereich (118) aufweist;
- in jedem Endbereich (117) der Innenfläche (114) der Trägerschicht (110) eine erste Beschichtung (120) bestehend aus einem ersten metallischen Beschichtungswerkstoff (121), wobei die erste Beschichtung (120) mit der Trägerschicht (110) verschweißt ist, wobei die erste Beschichtung (120) eine erste Dicke (122), eine Einbrandtiefe (123) und eine Längserstreckung (124) aufweist;
und **gekennzeichnet durch**:
- in dem Zwischenbereich (118) der Innenfläche (114) der Trägerschicht (110) eine zweite Beschichtung (130) bestehend aus einem zweiten metallischen Beschichtungswerkstoff (131), wobei die zweite Beschichtung (130) mit einem thermischen Spritzverfahren auf die Trägerschicht (110) aufgespritzt ist;
wobei die Trägerschicht (110) an der Innenfläche (114) eine Rauheit Rₐ von größer oder gleich 0,2 µm aufweist, bevorzugt eine Rauheit Rₐ von größer oder gleich 0,4 µm und besonders bevorzugt eine Rauheit Rₐ von größer oder gleich 0,8 µm, und die Trägerschicht (110) an der Innenfläche (114) eine Rauheit Ra von kleiner oder gleich 25,0 µm aufweist.

2. Rohrabschnitt (100) gemäß Anspruch 1, **dadurch gekennzeichnet, dass** die Trägerschicht (110) an der Innenfläche (114) eine Rauheit Rₐ von kleiner oder gleich 12,5 µm und besonders bevorzugt eine Rauheit Rₐ von kleiner oder gleich 10,0 µm aufweist.

3. Rohrabschnitt (100) gemäß einem der Ansprüche 1 oder 2, **dadurch gekennzeichnet, dass** die erste Beschichtung (120) mit einem Auftragsschweißverfahren auf die Trägerschicht (110) aufgebracht ist, insbesondere mit einem Laserauftragsschweißverfahren.

4. Rohrabschnitt (100) gemäß Anspruch 3, **dadurch gekennzeichnet, dass** die erste Beschichtung (120) eine Einbrandtiefe (123) von kleiner oder gleich 500 µm aufweist, bevorzugt eine Einbrandtiefe (123) von kleiner oder gleich 150 µm und besonders bevorzugt eine Einbrandtiefe (123) von kleiner oder gleich 75 µm.

5. Rohrabschnitt (100) gemäß einem der vorstehenden Ansprüche, **dadurch gekennzeichnet, dass** die zweite Beschichtung (130) mit einem Lichtbogenspritzverfahren auf die Trägerschicht (110) aufgespritzt ist.

6. Rohrabschnitt (100) gemäß einem der vorstehenden Ansprüche, **dadurch gekennzeichnet, dass** die erste Beschichtung (120) und/oder die zweite Beschichtung (130) einen Nickelanteil von größer oder gleich 38 Gew.-%, bevorzugt einen Nickelanteil von größer oder gleich 48 Gew.-% und besonders bevorzugt einen Nickelanteil von größer oder gleich 58 Gew.-%, und/oder einen Nickelanteil von kleiner oder gleich 75 Gew.-%, bevorzugt einen Nickelanteil von kleiner oder gleich 70 Gew.-% und besonders bevorzugt einen Nickelanteil von kleiner oder gleich 65 Gew.-%, aufweist.

7. Rohrabschnitt (100) gemäß einem der vorstehenden Ansprüche, **dadurch gekennzeichnet, dass** die erste Beschichtung (120) und/oder die zweite Beschichtung (130) einen Chromanteil von größer oder gleich 12 Gew.-%, bevorzugt einen Chromanteil von größer oder gleich 16 Gew.-% und besonders bevorzugt einen Chromanteil von größer oder gleich 20 Gew.-%, und/oder einen Chromanteil von kleiner oder gleich 31 Gew.-%, bevorzugt einen Chromanteil von kleiner oder gleich 27 Gew.-% und besonders bevorzugt einen Chromanteil von kleiner oder gleich 23 Gew.-%, aufweist.

8. Rohrabschnitt (100) gemäß einem der vorstehenden Ansprüche, **dadurch gekennzeichnet, dass** die erste Beschichtung (120) und/oder die zweite Beschichtung (130) eine Härte nach Vickers, gemessen bei 20°C, von größer oder gleich 150 HV aufweist, bevorzugt eine Härte nach Vickers von größer oder gleich 200 HV und besonders bevorzugt eine Härte nach Vickers von größer oder gleich 250 HV.

9. Rohrabschnitt (100) gemäß einem der vorstehenden Ansprüche, **dadurch gekennzeichnet, dass** die erste Beschichtung (120) und/oder die zweite Beschichtung (130) eine Versiegelung aufweist.

10. Rohranordnung aus zumindest zwei Rohrabschnitten (100) gemäß einem der Ansprüche 1 bis 9, wobei ein erster Rohrabschnitt (100) und ein zweiter Rohrabschnitt (100) an zwei korrespondierenden Rohrabschnittenden (116) stoffschlüssig miteinander verbunden sind.

11. Verfahren zum Herstellen eines Rohrabschnitts (100) gemäß einem der Ansprüche 1 bis 9, **gekennzeichnet durch** die nachfolgenden Schritte:
- Bereitstellen einer Trägerschicht (110) bestehend aus einem metallischen Grundwerkstoff, wobei die Trägerschicht (110) eine Länge (112), einen Innendurchmesser (113), eine Innenfläche (114), eine Außenfläche (115) zumindest zwei Rohrabschnittenden (116) mit jeweils einem Endbereich (117) und einen Zwischenbereich (118) aufweist;
- Aufrauen der Trägerschicht (110) auf der Innenfläche (114);
- Aufbringen einer ersten Beschichtung (120) in jedem Endbereich (117) der Innenfläche (114) der Trägerschicht (110), insbesondere mit einem Laserauftragsschweißverfahren; und
- Aufbringen einer zweiten Beschichtung (130) in dem Zwischenbereich (118) der Innenfläche (114) der Trägerschicht (110), insbesondere mit einem Lichtbogenspritzverfahren.

12. Verfahren nach Anspruch 11, **dadurch gekennzeichnet, dass** die Trägerschicht (110) auf der Innenfläche (114) vor dem Aufbringen der ersten Beschichtung (120) und/oder der zweiten Beschichtung (130) auf eine Temperatur von größer oder gleich 20°C vorerwärmt wird, bevorzugt auf eine Temperatur von größer oder gleich 40°C und besonders bevorzugt auf eine Temperatur von größer oder gleich 70°C.

13. Verfahren nach einem der Ansprüche 11 bis 12, **dadurch gekennzeichnet, dass** eine zweite Dicke (132) der zweiten Beschichtung (130) in Abhängigkeit eines Umfangswinkels des Rohrabschnitts (100) und/oder einer Längserstreckung des Rohrabschnitts (100) variierend aufgebracht wird, insbesondere mit einer Varianz von größer oder gleich 3 % bezogen auf die maximale zweite Dicke (132), bevorzugt mit einer Varianz von größer oder gleich 5 % bezogen auf die maximale zweite Dicke (132) und besonders bevorzugt mit einer Varianz von größer oder gleich 10 % bezogen auf die maximale zweite Dicke (132).

14. Verfahren zum Herstellen einer Rohranordnung gemäß Anspruch 10 aus zumindest zwei Rohrabschnitten (100) gemäß einem der Ansprüche 1 bis 9, **dadurch gekennzeichnet, dass** ein erster Rohrabschnitt (100) und ein zweiter Rohrabschnitt (100) an zwei korrespondierenden Rohrabschnittenden (116) stoffschlüssig miteinander verbunden werden.

15. Verwendung einer Rohranordnung gemäß Anspruch 10 zum Befördern eines ölhaltigen und/oder gashaltigen Fluids und/oder eines Fluids aufweisend einen flüssigen fossilen Energieträger.

## Claims

1. A pipe section (100), in particular pipe section (100) for conveying oil and/or gas, comprising:
- a support layer (110) consisting of a metal base material (111), the support layer (110) having a length (112), an inner diameter (113), an inner surface (114), an outer surface (115), at least two pipe section ends (116) each having an end region (117), and an intermediate region (118);
- in each end region (117) of the inner surface (114) of the support layer (110), a first coating (120) consisting of a first metal coating material (121), the first coating (120) being welded to the support layer (110), the first coating (120) having a first thickness (122), a penetration depth (123) and a longitudinal extension (124); and **characterized in that**:
- in the intermediate region (118) of the inner surface (114) of the support layer (110), a second coating (130) consisting of a second metal coating material (131), the second coating (130) being sprayed onto the support layer (110) using a thermal spraying process;
wherein the support layer (110), on the inner surface (114), has a roughness Rₐ of more than or equal to 0.2 µm, preferably a roughness Rₐ of more than or equal to 0.4 µm, and more preferably a roughness Rₐ of more than or equal to 0.8 µm, and wherein the support layer (110), on the inner surface (114), has a roughness Rₐ of less than or equal to 25.0 µm.

2. The pipe section (100) according to claim 1, **characterized in that** the support layer (110), on the inner surface (114), has a roughness Rₐ of less than or equal to 12.5 µm, and more preferably has a roughness Rₐ of less than or equal to 10.0 µm.

3. The pipe section (100) according to any of claims 1 or 2, **characterized in that** the first coating (120) is applied to the support layer (110) using a deposition welding process, in particular using a laser deposition welding process.

4. The pipe section (100) according to claim 3, **characterized in that** the first coating (120) has a penetration depth (123) of less than or equal to 500 µm, preferably a penetration depth (123) of less than or equal to 150 µm, and more preferably a penetration depth (123) of less than or equal to 75 µm.

5. The pipe section (100) according to any of the preceding claims,
**characterized in that** the second coating (130) is sprayed onto the support layer (110) using an arc spraying process.

6. The pipe section (100) according to any of the preceding claims, **characterized in that** the first coating (120) and/or the second coating (130) has a nickel content of greater than or equal to 38 wt.%, preferably a nickel content of greater than or equal to 48 wt.%, and more preferably a nickel content of greater than or equal to 58 wt.%, and/or a nickel content of less than or equal to 75 wt.%, preferably a nickel content of less than or equal to 70 wt.%, and more preferably a nickel content of less than or equal to 65 wt.%.

7. The pipe section (100) according to any of the preceding claims, **characterized in that** the first coating (120) and/or the second coating (130) has a chromium content of greater than or equal to 12 wt.%, preferably a chromium content of greater than or equal to 16 wt.%, and more preferably a chromium content of greater than or equal to 20 wt.%, and/or a chromium content of less than or equal to 31 wt.%, preferably a chromium content of less than or equal to 27 wt.%, and more preferably a chromium content of less than or equal to 23 wt.%.

8. The pipe section (100) according to any of the preceding claims, **characterized in that** the first coating (120) and/or the second coating (130) has a Vickers hardness, measured at 20°C, of greater than or equal to 150 HV, preferably a Vickers hardness of greater than or equal to 200 HV, and more preferably a Vickers hardness of greater than or equal to 250 HV.

9. The pipe section (100) according to any of the preceding claims, **characterized in that** the first coating (120) and/or the second coating (130) has a sealing.

10. A pipe assembly comprising at least two pipe sections (100) according to any of claims 1 to 9, wherein a first pipe section (100) and a second pipe section (100) are connected to one another at two corresponding pipe section ends (116) in a materially bonded manner.

11. A method for manufacturing a pipe section (100) according to any of claims 1 to 9, **characterized by** the following steps:
- providing a support layer (110) consisting of a metal base material, the support layer (110) having a length (112), an inner diameter (113), an inner surface (114), an outer surface (115), at least two pipe section ends (116) each having an end region (117), and an intermediate region (118);
- roughening the support layer (110) on the inner surface (114);
- applying a first coating (120) in each end region (117) of the inner surface (114) of the support layer (110), in particular using a laser deposition welding process; and
- applying a second coating (130) in the intermediate region (118) of the inner surface (114) of the support layer (110), in particular using an arc spraying process.

12. The method according to claim 11, **characterized in that,** before the first coating (120) and/or the second coating (130) is applied, the support layer (110) on the inner surface (114) is preheated to a temperature of greater than or equal to 20°C, preferably to a temperature of greater than or equal to 40°C, and more preferably to a temperature of greater than or equal to 70°C.

13. The method according to any of claims 11 to 12, **characterized in that** a second thickness (132) of the second coating (130) is applied in a varying manner depending on a circumferential angle of the pipe section (100) and/or a longitudinal extension of the pipe section (100), in particular with a variance of greater than or equal to 3% relative to the maximum second thickness (132), preferably with a variance of greater than or equal to 5% relative to the maximum second thickness (132), and more preferably with a variance of greater than or equal to 10% relative to the maximum second thickness (132).

14. The method for manufacturing a pipe assembly according to claim 10 from at least two pipe sections (100) according to any of claims 1 to 9, **characterized in that** a first pipe section (100) and a second pipe section (100) are connected to one another at two corresponding pipe section ends (116) in a materially bonded manner.

15. A use of a pipe assembly according to claim 10 for conveying an oil-containing and/or gas-containing fluid and/or a fluid comprising a liquid fossil energy carrier.

## Revendications

1. Section formant tuyau (100), en particulier section formant tuyau (100) pour le transport de pétrole et/ou de gaz, présentant :
- une couche de support (110) constituée d'un matériau de base (111) métallique, dans laquelle la couche de support (110) présente une longueur (112), un diamètre intérieur (113), une surface intérieure (114), une surface extérieure (115) et au moins deux extrémités de section formant tuyau (116) comportant respectivement une zone d'extrémité (117) et une zone intermédiaire (118) ;
- dans chaque zone d'extrémité (117) de la surface intérieure (114) de la couche de support (110), un premier revêtement (120) constitué d'un premier matériau de revêtement (121) métallique, dans laquelle le premier revêtement (120) est soudé à la couche de support (110), dans laquelle le premier revêtement (120) présente une première épaisseur (122), une profondeur de pénétration (123) et une extension longitudinale (124) ;
et **caractérisée par** :
- dans la zone intermédiaire (118) de la surface intérieure (114) de la couche de support (110), un second revêtement (130) constitué d'un second matériau de revêtement (131) métallique, dans laquelle le second revêtement (130) est pulvérisé sur la couche de support (110) par un procédé de pulvérisation thermique ;
dans laquelle la couche de support (110) présente, sur la surface intérieure (114), une rugosité Rₐ supérieure ou égale à 0,2 µm, de préférence une rugosité Rₐ supérieure ou égale à 0,4 µm et de manière particulièrement préférée une rugosité Rₐ supérieure ou égale à 0,8 µm, et la couche de support (110) présente, sur la surface intérieure (114), une rugosité Rₐ inférieure ou égale à 25,0 µm.

2. Section formant tuyau (100) selon la revendication 1,
**caractérisée en ce que** la couche de support (110) présente, sur la surface intérieure (114), une rugosité Rₐ inférieure ou égale à 12,5 µm et de manière particulièrement préférée une rugosité Rₐ inférieure ou égale à 10,0 µm.

3. Section formant tuyau (100) selon l'une des revendications 1 ou 2, **caractérisée en ce que** le premier revêtement (120) est appliqué sur la couche de support (110) par un procédé de soudage par rechargement, en particulier par un procédé de soudage par rechargement au laser.

4. Section formant tuyau (100) selon la revendication 3,
**caractérisée en ce que** le premier revêtement (120) présente une profondeur de pénétration (123) inférieure ou égale à 500 µm, de préférence une profondeur de pénétration (123) inférieure ou égale à 150 µm et de manière particulièrement préférée une profondeur de pénétration (123) inférieure ou égale à 75 µm.

5. Section formant tuyau (100) selon l'une des revendications précédentes, **caractérisée en ce que** le second revêtement (130) est pulvérisé sur la couche de support (110) par un procédé de pulvérisation à l'arc électrique.

6. Section formant tuyau (100) selon l'une des revendications précédentes, **caractérisée en ce que** le premier revêtement (120) et/ou le second revêtement (130) présentent une teneur en nickel supérieure ou égale à 38 % en poids, de préférence une teneur en nickel supérieure ou égale à 48 % en poids et de manière particulièrement préférée une teneur en nickel supérieure ou égale à 58 % en poids, et/ou une teneur en nickel inférieure ou égale à 75 % en poids, de préférence une teneur en nickel inférieure ou égale à 70 % en poids et de manière particulièrement préférée une teneur en nickel inférieure ou égale à 65 % en poids.

7. Section formant tuyau (100) selon l'une des revendications précédentes, **caractérisée en ce que** le premier revêtement (120) et/ou le second revêtement (130) présentent une teneur en chrome supérieure ou égale à 12 % en poids, de préférence une teneur en chrome supérieure ou égale à 16 % en poids et de manière particulièrement préférée une teneur en chrome supérieure ou égale à 20 % en poids, et/ou une teneur en chrome inférieure ou égale à 31 % en poids, de préférence une teneur en chrome inférieure ou égale à 27 % en poids et de manière particulièrement préférée une teneur en chrome inférieure ou égale à 23 % en poids.

8. Section formant tuyau (100) selon l'une des revendications précédentes, **caractérisée en ce que** le premier revêtement (120) et/ou le second revêtement (130) présentent une dureté Vickers, mesurée à 20 °C, supérieure ou égale à 150 HV, de préférence une dureté Vickers supérieure ou égale à 200 HV et de manière particulièrement préférée une dureté Vickers supérieure ou égale à 250 HV.

9. Section formant tuyau (100) selon l'une des revendications précédentes, **caractérisée en ce que** le premier revêtement (120) et/ou le second revêtement (130) présentent un scellement.

10. Ensemble de tuyaux constitué d'au moins deux sections formant tuyaux (100) selon l'une des revendications 1 à 9, dans lequel une première section formant tuyau (100) et une seconde section formant tuyau (100) sont reliées l'une à l'autre par liaison de matière au niveau de deux extrémités de section formant tuyau (116) correspondantes.

11. Procédé de fabrication d'une section formant tuyau (100) selon l'une des revendications 1 à 9, **caractérisé par** les étapes suivantes :
- fourniture d'une couche de support (110) constituée d'un matériau de base métallique, dans lequel la couche de support (110) présente une longueur (112), un diamètre intérieur (113), une surface intérieure (114), une surface extérieure (115) et au moins deux extrémités de section formant tuyau (116) comportant respectivement une zone d'extrémité (117) et une zone intermédiaire (118) ;
- fait de rendre la couche de support (110) rugueuse sur la surface intérieure (114) ;
- application d'un premier revêtement (120) dans chaque zone d'extrémité (117) de la surface intérieure (114) de la couche de support (110), en particulier par un procédé de soudage par rechargement au laser ; et
- application d'un second revêtement (130) dans la zone intermédiaire (118) de la surface intérieure (114) de la couche de support (110), en particulier par un procédé de pulvérisation à l'arc électrique.

12. Procédé selon la revendication 11, **caractérisé en ce que** la couche de support (110) sur la surface intérieure (114) est préchauffée à une température supérieure ou égale à 20 °C, de préférence à une température supérieure ou égale à 40 °C et de manière particulièrement préférée à une température supérieure ou égale à 70 °C, avant l'application du premier revêtement (120) et/ou du second revêtement (130).

13. Procédé selon l'une des revendications 11 à 12**,caractérisé en ce qu'**une seconde épaisseur (132) du second revêtement (130) est appliquée de manière variable en fonction d'un angle circonférentiel de la section formant tuyau (100) et/ou d'une extension longitudinale de la section formant tuyau (100), en particulier avec une variance supérieure ou égale à 3 % par rapport à la seconde épaisseur (132) maximale, de préférence avec une variance supérieure ou égale à 5 % par rapport à la seconde épaisseur (132) maximale et de manière particulièrement préférée avec une variance supérieure ou égale à 10 % par rapport à la seconde épaisseur maximale (132).

14. Procédé de fabrication d'un ensemble de tuyaux selon la revendication 10 constitué d'au moins deux sections formant tuyaux (100) selon l'une des revendications 1 à 9, **caractérisé en ce qu'**une première section formant tuyau (100) et une seconde section formant tuyau (100) sont reliées l'une à l'autre par liaison de matière au niveau de deux extrémités de section formant tuyau (116) correspondantes.

15. Utilisation d'un ensemble de tuyaux selon la revendication 10 pour le transport d'un fluide contenant du pétrole et/ou du gaz et/ou d'un fluide présentant un combustible fossile liquide.
